# EUROPEAN PATENT APPLICATION

(11) **EP 4 481 631 A1**
(43) Date of publication of application: **25.12.2024**
(21) Application number: 22932386.0
(22) Date of filing: 14.06.2022
(51) Int. Cl.: G06N 5/04, H04L 67/10, H04L 67/289, H04L 67/61, H04L 67/12, G06N 3/006, G06N 3/063, G06N 3/098

(54) **EDGE-CLOUD COLLABORATION SYSTEM AND METHOD**

(30) Priority: 18.03.2022 KR 20220033973
(71) Applicant: LG Electronics Inc., Yeongdeungpo-gu Seoul 07336 (KR)
(72) Inventor: LEE, Yonghwan, Seoul 06772 (KR); KIM, Kihyeon, Seoul 06772 (KR); LEE, Jongyeop, Seoul 06772 (KR); SHIN, Ahyoung, Seoul 06772 (KR)
(74) Representative: Vossius & Partner Patentanwälte Rechtsanwälte mbB
(86) International application number: PCT/KR2022/008387
(87) International publication number: WO 2023/177019

(57) **Abstract**

The present disclosure relates to an edge-cloud collaboration system and method, enabling edge data to be inferred at a suitable location among an edge device and a cloud server according to the type and objective of the edge data, and enabling easy updating of the configuration of the edge device and the cloud server. A collaboration system may be provided in which an edge device comprises: a service coordinator which, for each of a plurality of services provided by the collaboration system, controls the flow of edge data in the collaboration service, the edge data being collected by at least one sensor; and an edge inferencer which may have at least one edge artificial intelligence model for receiving the edge data as input data for inference and outputting an inference result for each of at least one service among the plurality of services. A cloud server comprises: a cloud inferencer which comprises at least one cloud artificial intelligence model for receiving the edge data as input data for inference and outputting an inference result for each of at least one service among the plurality of services; and a collaboration manager for changing the configuration of at least one of the edge inferencer and the cloud inferencer on the basis of log information of the edge inferencer and the cloud inferencer.

## Description

### TECHNICAL FIELD

The present disclosure relates to an edge-cloud collaboration system and method, and more particularly, to a system and method for performing analysis of edge data collected from an edge device through collaboration between an edge device and a cloud server.

### BACKGROUND

Recently, due to the popularization of edge devices such as various Internet of Things (IoT) devices and the development of cloud computing technology, cloud services have been widely utilized in which edge data collected from an edge device is transmitted to a cloud server and the cloud server analyze the edge data.

In this cloud service, it may be insufficient at least in terms of cloud communication traffic and latency that the edge device transmits all edge data to the cloud server and the cloud server processes all edge data. When all edge data collected by the edge device is transmitted to the cloud server, private personal data may also be provided to the cloud server, which may raise privacy concerns.

To address these issues, edge computing technology may be used to analyze edge data by the edge device collecting the edge data or on a separate edge device, rather than transmitting edge data to the cloud server for data analysis.

However, in this case, a high-specification edge device needs to be utilized for smooth edge data processing, which may be inefficient in terms of cost.

An artificial intelligence model may be applied to the edge device and the cloud server to analyze the edge data. However, for the edge data to be used for various purposes, there is a need for a method of configuring the edge device and the cloud server and/or easily updating an artificial intelligence model applied to each of the edge device and the cloud server.

### DISCLOSURE

### Technical Problem

The present disclosure is to provide an edge-cloud collaboration system and method for inferring edge data from an appropriate location from among an edge device and a cloud server depending on a type and purpose of the edge data.

The present disclosure is to provide an edge-cloud collaboration system and method for configuring the edge device and the cloud server and/or easily updating an artificial intelligence model applied to each of the edge device and the cloud server to use the edge data for various purposes in the edge device and the cloud server.

### Technical Solution

According to the present disclosure, a collaboration system between an edge device and a cloud server is provided, the edge device including a service coordinator configured to manage a flow of edge data collected by at least one sensor within the collaboration system for each of a plurality of services provided by the collaboration system, and an edge inferencer including at least one edge artificial intelligence model configured to receive the edge data as input data for inference and output an inference result for each of at least one service from among the plurality of services, and the cloud server including a cloud inferencer including at least one cloud artificial intelligence model configured to receive the edge data as the input data for inference and output an inference result for each of at least one service from among the plurality of services, and a collaboration manager configured to change a configuration of at least one of the edge inferencer or the cloud inferencer based on log information of the edge inferencer and the cloud inferencer.

The collaboration manager may be configured to change or generate data flow setting to match the changed configuration, and the service coordinator may be configured to receive the data flow setting and manage the flow of the edge data within the collaboration system for each service based on the data flow setting.

The collaboration system may further include a service outpost configured to detect triggering data from the edge data.

The collaboration manager may be configured to further change a configuration of the service outpost based on log information of the edge inferencer and the cloud inferencer.

The service coordinator may be configured to transmit the edge data as the input data for inference to the edge inferencer or the cloud inferencer for a certain period of time from a time at which the triggering data is detected.

The service outpost may be configured to process the edge data to extract a feature of the edge data, and the service coordinator may be configured to transmit the processed edge data as the input data for inference to the edge inferencer or the cloud inferencer for a certain period of time from a time at which the triggering data is detected.

The service coordinator may be configured to receive edge data from the at least one sensor, check a target service related with the received edge data from among a plurality of services, check an inference location related with the target service based on the triggering data being detected through the service outpost, and transmit the edge data to an inferencer matching the inference location from among the edge inferencer and the cloud inferencer.

The service coordinator may be configured to check an inference location related with the target service through the data flow setting.

The collaboration manager may be configured to determine priorities of the plurality of services based on edge inferencer application suitability for each service of the plurality of services, determine an inference location by comparing a required resource for each of the plurality of services and an available resource of the edge device according to the priorities, and perform system configuration optimization based on an inference location for each service of the plurality of services.

The collaboration manager may be configured to change a configuration of at least one of the edge inferencer or the cloud inferencer through the performed system configuration optimization.

The collaboration manager may be configured to calculate an edge inferencer application suitability for each service by multiplying a prepared edge inferencer suitability parameter for each item for each service by a prepared weight for each item and summing result values for all items.

The weight for each item may have different values in normal times and in emergency situations, and edge inferencer application suitability for each service in normal times may be different from edge inferencer application suitability for each service in emergency situations.

The collaboration manager may be configured to perform the system configuration optimization at regular time intervals or based on a certain event occurring.

The collaboration system may further include a collaboration user interface configured to output the changed configuration and obtain approval from a user for the changed configuration, wherein the collaboration manager may be configured to apply the changed configuration to the system after obtaining approval from the user for the changed configuration through the collaboration user interface.

As the changed configuration is applied to the collaboration system, at least one of the number of edge artificial intelligence models in the edge inferencer or the number of cloud artificial intelligence models in the cloud inferencer may change.

The service outpost may include at least one service filter, where a service filter may be responsible for at least one service.

One of the at least one service filter may include a backbone configured to process the edge data to extract features for two or more services, and two or more outpost artificial intelligence models configured to detect the triggering data for each of the two or more services from the processed edge data.

Another one of the at least one service filter may include a backbone configured to process the edge data to extract features for two or more services, and a decision logic configured to detect the triggering data for each of the two or more services from the processed edge data.

Another one of the at least one service filter may include a lightweight artificial intelligence model configured to detect triggering data from raw edge data received from the at least one sensor.

According to the present disclosure, a collaboration method between an edge device and a cloud server includes collecting edge data through at least one sensor of the edge device, managing a flow of the edge data within the collaboration system for each of a plurality of services provided by the collaboration system through a service coordinator of the edge device, receiving the edge data as input data for inference and outputting an inference result for each of at least one service from among the plurality of services through at least edge artificial intelligence model in the edge inferencer of the edge device, receiving the edge data as the input data for inference and outputting an inference result for each of at least one service from among the plurality of services through at least cloud artificial intelligence model in the cloud inferencer of the cloud server, and changing a configuration of at least one of the edge inferencer or the cloud inferencer based on log information of the edge inferencer and the cloud inferencer through a collaboration manager of the cloud server.

According to the present disclosure, a cloud server communicable with an edge device includes a cloud inferencer including at least one cloud artificial intelligence model configured to receive edge data as input data for inference from the edge device and output an inference result for each of at least one service from among the plurality of services to be provided by the edge device, and a collaboration manager configured to change a configuration of the cloud inferencer based on at least one of log information of the cloud inferencer, received from the cloud inferencer, or log information of the edge inferencer, received from the edge inferencer provided in the edge device.

The collaboration manager may be configured to change a configuration of the edge inferencer based on at least one of the log information of the cloud inferencer or the log information of the edge inferencer and transmit information about the changed configuration of the edge inference to the edge device.

The collaboration manager may be configured to change a configuration of a service outpost of the edge device for detecting triggering data from the edge data based on at least one of the log information of the edge inferencer received from the edge inferencer provided in the edge device and transmit information about the changed configuration of the service outpost to the edge device.

The collaboration manager may be configured to generate data flow setting regarding a flow of the edge data in the cloud server and the edge device and transmit the generated data flow setting to the edge device.

As the configuration of the cloud inferencer changes, the number of cloud artificial intelligence models within the cloud inferencer may change, and as the configuration of the edge inferencer changes, the number of edge artificial intelligence models within the edge inferencer may change.

The collaboration manager may be configured to determine priorities of the plurality of services based on edge inferencer application suitability for each service of the plurality of services, determine an inference location by comparing a required resource for each of the plurality of services and an available resource of the edge device according to the priorities, and change a configuration of at least one of the cloud inferencer and the edge inferencer based on an inference location for each service of the plurality of services.

The collaboration manager may be configured to change the configuration at regular time intervals or based on a certain event occurring.

The collaboration manager may be configured to further change the configuration of the edge inferencer as the usage of the edge device changes.

The collaboration manager may be configured to receive information about the usage of the edge device from the edge device.

The collaboration manager may be configured to determine an initial inference location for providing a new service to the cloud inferencer and change the inference location to the edge inferencer after a certain period of time elapses after providing the new service.

The collaboration manager may be configured to determine an inference location for a specific service based on a communication environment with the edge device.

The collaboration manager may be configured to determine the inference location for the specific service to the cloud inferencer when communication with the edge device is good and determine the inference location for the specific service to the edge inferencer when communication with the edge device is poor.

According to the present disclosure, a method of controlling a cloud server communicable with an edge device includes receiving edge data as input data for inference from the edge device and outputting an inference result for each of at least one service of the plurality of services to be provided by the edge device through the cloud inferencer of the cloud server, and changing a configuration of the cloud inferencer based on at least one of log information of the cloud inferencer, received from the cloud inferencer, received from a collaboration manager of the cloud server, and log information of the edge inferencer, received from the edge inferencer provided in the edge device.

According to the present disclosure, an edge device communicable with a cloud server includes a service coordinator configured to manage a flow of edge data collected by at least one sensor within the collaboration system for each of a plurality of services provided by the edge device, and an edge inferencer including at least one edge artificial intelligence model configured to receive the edge data as input data for inference and output an inference result for each of at least one service from among the plurality of services, wherein a configuration of the edge inferencer may be changed according to configuration information received from the cloud server.

The edge device may further include a service outpost configured to detect triggering data from the edge data.

A configuration of the service outpost may be changed according to the configuration information received from the cloud server.

The service coordinator may be configured to transmit the edge data as the input data for inference to the edge inferencer or the cloud inferencer of the cloud server for a certain period of time from a time at which the triggering data is detected.

The service outpost may be configured to process the edge data to extract a feature of the edge data, and the service coordinator may be configured to transmit the processed edge data as the input data for inference to the edge inferencer or the cloud inferencer of the cloud server for a certain period of time from a time at which the triggering data is detected.

The service coordinator may be configured to receive edge data from the at least one sensor, check a target service related with the received edge data from among a plurality of services, check an inference location related with the target service based on the triggering data being detected through the service outpost, and transmit the edge data to an inferencer matching the inference location from among the edge inferencer and the cloud inferencer of the cloud server.

The service coordinator may be configured to check an inference location related with the target service based on information about data flow setting received from the cloud server.

As the configuration of the edge inferencer changes, the number of edge artificial intelligence models within the edge inferencer may change.

The service outpost may include at least one service filter, where a service filter may be responsible for at least one service.

One of the at least one service filter may include a backbone configured to process the edge data to extract features for two or more services, and two or more outpost artificial intelligence models configured to detect the triggering data for each of the two or more services from the processed edge data.

Another one of the at least one service filter may include a backbone configured to process the edge data to extract features for two or more services, and a decision logic configured to detect the triggering data for each of the two or more services from the processed edge data.

Another one of the at least one service filter may include a lightweight artificial intelligence model configured to detect triggering data from raw edge data received from the at least one sensor.

A reference for detecting the triggering data may be changed according to a location of the edge device.

According to the present disclosure, a method of controlling an edge device communicable with a cloud server includes managing a flow of edge data collected by at least one sensor within the collaboration system for each of a plurality of services provided by the edge device, receiving the edge data as input data for inference and outputting an inference result for each of at least one service from among the plurality of services through an edge inferencer of the edge device, and changing a configuration of the edge inferencer may be changed according to configuration information received from the cloud server.

### Advantageous Effects

The effects of an edge-cloud collaboration system and method according to the present disclosure are as follows.

According to at least one of the embodiments of the present disclosure, edge data may be inferred from an appropriate location between an edge device and a cloud server depending on a type and purpose of edge data.

According to at least one of the embodiments of the present disclosure, an artificial intelligence model may be applied to an edge device and a cloud server such that edge data may be used for various purposes, or an artificial intelligence model that is previously applied may be easily updated to be utilized for other purposes as well.

### BRIEF DESCRIPTION OF THE DRAWINGS

FIG. 1 illustrates an artificial intelligence (AI) device according to an embodiment of the present disclosure.
FIG. 2 illustrates an AI server according to an embodiment of the present disclosure.
FIG. 3 illustrates an AI system according to an embodiment of the present disclosure.
FIG. 4 illustrates an AI device according to an embodiment of the present disclosure.
FIG. 5 is a block diagram of a collaboration system between an edge device and a cloud server in terms of software according to an embodiment of the present disclosure.
FIG. 6 is a block diagram illustrating in more detail a relationship between the service coordinator and the service outpost of the collaboration system of FIG. 5.
FIG. 7 is a block diagram illustrating a service outpost of FIG. 6 in more detail.
FIG. 8 is a block diagram illustrating in more detail a relationship between a service outpost, edge inferencer, and cloud inferencer of a collaboration system of FIG. 5.
FIGS. 9 to 12 illustrate modified examples of a system configuration in the collaboration system of FIG. 5.
FIG. 13 is a diagram illustrating in more detail a collaboration user interface of the collaboration system of FIG. 5.
FIG. 14 illustrates a process in which edge data is processed in one selected from an edge inferencer and a cloud inferencer for service provision according to an embodiment of the present disclosure.
FIG. 15 illustrates a process for optimizing a system configuration according to an embodiment of the present disclosure.
FIG. 16 illustrates the process of calculating edge inferencer application suitability for each service and parameters and weights therefor.
FIG. 17 illustrates an example of calculation of the edge inferencer application suitability for each service of FIG. 16.
FIG. 18 illustrates an example in which system configuration optimization is implemented according to an embodiment of the present disclosure.
FIG. 19 illustrates an example in which system configuration optimization is implemented according to an embodiment of the present disclosure.
FIG. 20 illustrates an example in which system configuration optimization is implemented according to an embodiment of the present disclosure.
FIG. 21 illustrates an example in which system configuration optimization is implemented according to an embodiment of the present disclosure.
FIG. 22 illustrates an example in which system configuration optimization is implemented according to an embodiment of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Each of these elements may be configured as a separate individual hardware module or implemented as two or more hardware modules. Two or more elements may be implemented as a single hardware module. In some cases, at least one of these elements may be implemented as software.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

In this disclosure, the expression "at least one of A or B" may mean "A", "B", or "A and B".

Hereinafter, artificial intelligence (AI) to be utilized in the present disclosure will be described.

Artificial Intelligence (AI) refers to a field that studies artificial intelligence or methodology capable of achieving artificial intelligence. Machine learning refers to a field that defines various problems handled in the AI field and studies methodology for solving the problems. Machine learning may also be defined as an algorithm for raising performance for any task through steady experience of the task.

An artificial neural network (ANN) may refer to a model in general having problem solving capabilities, that is composed of artificial neurons (nodes) constituting a network by a combination of synapses, as a model used in machine learning. The ANN may be defined by a connection pattern between neurons of different layers, a learning process of updating model parameters, and/or an activation function for generating an output value.

The ANN may include an input layer, an output layer, and, optionally, one or more hidden layers. Each layer includes one or more neurons and the ANN may include a synapse connecting neurons. In the ANN, each neuron may output input signals, which are input through the synapse, weights, and function values of an activation function for deflection.

A model parameter refers to a parameter determined through learning and includes a weight of synaptic connection and a deflection of a neuron. A hyperparameter refers to a parameter that should be configured before learning in a machine learning algorithm and includes a learning rate, the number of repetitions, a mini batch size, an initialization function, and the like.

The purpose of learning of the ANN may be understood as determining the model parameter that minimizes a loss function. The loss function may be used as an index to determine an optimal model parameter in a learning process of the ANN.

Machine learning may be classified into supervised learning, unsupervised learning, and reinforcement learning, according to a learning scheme.

Supervised learning refers to a method of training the ANN in a state in which a label for training data is given. The label may represent a correct answer (or result value) that the ANN should infer when the training data is input to the ANN. Unsupervised learning may refer to a method of training the ANN in a state in which the label for the training data is not given. Reinforcement learning may refer to a learning method in which an agent defined in a certain environment is trained to select a behavior or a behavior order that maximizes accumulative compensation in each state.

Among ANNs, machine learning implemented as a deep neural network (DNN) including a plurality of hidden layers is also called deep learning. Deep learning is a part of machine learning. Hereinbelow, machine learning includes deep learning.

An object detection model using machine learning includes a you only look once (YOLO) model of a single-step scheme, faster regions with convolution neural networks (R-CNN) model of a two-step scheme, and the like.

The you only look once (YOLO) model is a model in which an object existing in an image and a position of the corresponding object may be predicted as the image is viewed only once.

The you only look once (YOLO) model divides the original image into grids of the same size. Then, for each grid, the number of bounding boxes specified in a predefined form around a center of the grid is predicted, and reliability is calculated based on the predicted number.

Thereafter, whether the image contains the object or contains only a background may be included, and a location with high object reliability may be selected, so that an object category may be identified.

The faster regions with convolution neural networks (R-CNN) model is a model that may detect the object faster than an RCNN model and a Fast RCNN model.

The faster regions with convolution neural networks (R-CNN) model will be described in detail.

First, a feature map is extracted from the image via a convolution neural network (CNN) model. Based on the extracted feature map, a plurality of regions of interest (RoIs) are extracted. Rol pooling is performed for each region of interest.

The RoI pooling is a process of setting grids of a feature map to which the regions of interest are projected to fit a H x W size that is determined in advance and extracting the greatest value for each cell included in each grid to extract a feature map having the H x W size.

A feature vector may be extracted from the feature map having the H x W size, and identification information of the object may be obtained from the feature vector.

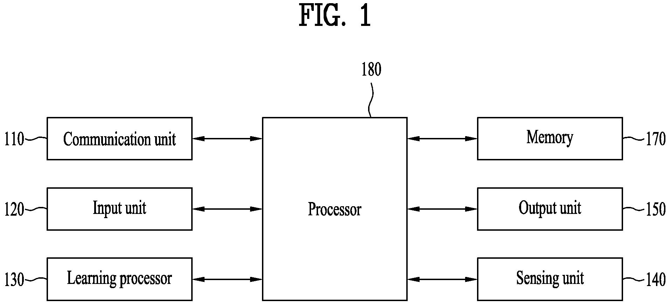

Hereinafter, with reference to FIG. 1, an AI device to be used as an edge device in the present disclosure will be described. FIG. 1 illustrates an AI device 100 according to an embodiment of the present disclosure.

The AI device 100 illustrated in FIG. 1 may be configured as a stationary device or a mobile device, such as a TV, a projector, a portable phone, a smartphone, a desktop computer, a laptop computer, a digital broadcasting terminal, a personal digital assistant (PDA), a portable multimedia player (PMP), a navigation device, a tablet PC, a wearable device, a set-top box (STB), a digital multimedia broadcasting (DMB) receiver, a radio, a washing machine, a refrigerator, a digital signage, a robot, or a vehicle.

Referring to FIG. 1, the AI device 100 may include a communication unit 110, an input unit 120, a learning processor 130, a sensing unit 140, an output unit 150, a memory 170, and a processor 180.

The communication unit 110 may transmit and receive data to and from an external device such as other AI devices 100a to 100e or an AI server 200 by wired or wireless communication. For example, the communication unit 110 may transmit and receive sensor information, a user input, a learning model, and a control signal to and from the external device.

Communication schemes used by the communication unit 110 include global system for mobile communication (GSM), CDMA, LTE, 5G, wireless local area network (WLAN), wireless fidelity (Wi-Fi), Bluetooth^{™}, radio frequency identification (RFID), infrared data association (IrDA), ZigBee, near field communication (NFC), and so on.

The input unit 120 may acquire various types of data.

The input unit 120 may include a camera for inputting a video signal, a microphone for receiving an audio signal, and a user input unit for receiving information from a user. The camera or the microphone may be treated as a sensor, and thus a signal acquired from the camera or the microphone may be referred to as sensing data or sensor information.

The input unit 120 may acquire training data for model training and input data to be used to acquire an output by using a learning model. The input unit 120 may acquire raw input data. In this case, the processor 180 or the learning processor 130 may extract an input feature by preprocessing the input data.

The learning processor 130 may train a model composed of an ANN by using training data. The trained ANN may be referred to as a learning model. The learning model may be used to infer a result value for new input data, not training data, and the inferred value may be used as a basis for determination to perform a certain operation.

The learning processor 130 may perform AI processing together with a learning processor 240 of an AI server 200.

The learning processor 130 may include a memory integrated or implemented in the AI device 100. Alternatively, the learning processor 130 may be implemented by using the memory 170, an external memory directly connected to the AI device 100, or a memory maintained in an external device.

The sensing unit 140 may acquire at least one of internal information about the AI device 100, ambient environment information about the AI device 100, and user information by using various sensors.

The sensors included in the sensing unit 140 may include a proximity sensor, an illumination sensor, an accelerator sensor, a magnetic sensor, a gyro sensor, an inertial sensor, a red, green, blue (RGB) sensor, an IR sensor, a fingerprint recognition sensor, an ultrasonic sensor, an optical sensor, a microphone, a light detection and ranging (LiDAR), and a radar.

The output unit 150 may generate a visual, auditory, or haptic output.

Accordingly, the output unit 150 may include a display unit for outputting visual information, a speaker for outputting auditory information, and a haptic module for outputting haptic information.

The memory 170 may store data that supports various functions of the AI device 100. For example, the memory 170 may store input data acquired by the input unit 120, training data, a learning model, a learning history, and so on.

The processor 180 may determine at least one executable operation of the AI device 100 based on information determined or generated by a data analysis algorithm or a machine learning algorithm. The processor 180 may control the components of the AI device 100 to execute the determined operation.

To this end, the processor 180 may request, search, receive, or utilize data of the learning processor 130 or the memory 170. The processor 180 may control the components of the AI device 100 to execute a predicted operation or an operation determined to be desirable among the at least one executable operation.

When the determined operation needs to be performed in conjunction with an external device, the processor 180 may generate a control signal for controlling the external device and transmit the generated control signal to the external device.

The processor 180 may acquire intention information with respect to a user input and determine the user's requirements based on the acquired intention information.

The processor 180 may acquire the intention information corresponding to the user input by using at least one of a speech to text (STT) engine for converting a speech input into a text string or a natural language processing (NLP) engine for acquiring intention information of a natural language.

At least one of the STT engine or the NLP engine may be configured as an ANN, at least part of which is trained according to the machine learning algorithm. At least one of the STT engine or the NLP engine may be trained by the learning processor, a learning processor of the AI server, or distributed processing of the learning processors.

The processor 180 may collect history information including the operation contents of the AI device 100 or the user's feedback on the operation and may store the collected history information in the memory 170 or the learning processor 130 or transmit the collected history information to the external device such as the AI server. The collected history information may be used to update the learning model.

The processor 180 may control at least a part of the components of AI device 100 so as to drive an application program stored in the memory 170. Furthermore, the processor 180 may operate two or more of the components included in the AI device 100 in combination so as to drive the application program.

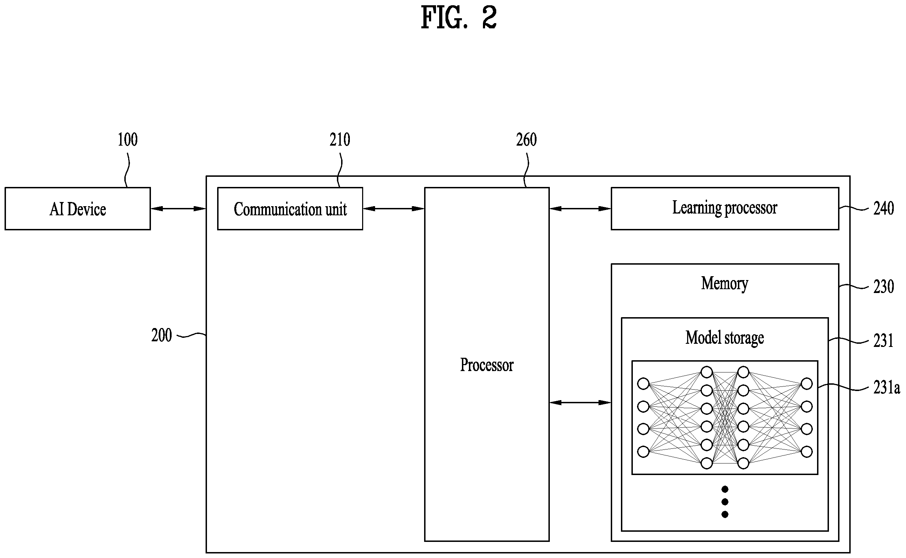

Hereinafter, an AI server to be used as a cloud server in the present disclosure will be described. FIG. 2 illustrates an AI server 200 according to an embodiment of the present disclosure.

Referring to FIG. 2, the AI server 200 may refer to a device that trains an ANN by a machine learning algorithm or uses a trained ANN. The AI server 200 may include a plurality of servers to perform distributed processing, or may be defined as a 5G network. The AI server 200 may be included as part of the AI device 100, and perform at least part of the AI processing.

The AI server 200 may include a communication unit 210, a memory 230, a learning processor 240, a processor 260, and so on.

The communication unit 210 may transmit and receive data to and from an external device such as the AI device 100.

The memory 230 may include a model storage 231. The model storage 231 may store a model (or an ANN 231a) which has been trained or is being trained through the learning processor 240.

The learning processor 240 may train the ANN 231a by training data. The learning model may be used, while being loaded on the AI server 200 of the ANN, or on an external device such as the AI device 100.

The learning model may be implemented in hardware, software, or a combination of hardware and software. If all or part of the learning model is implemented in software, one or more instructions of the learning model may be stored in the memory 230.

The processor 260 may infer a result value for new input data by using the learning model and may generate a response or a control command based on the inferred result value.

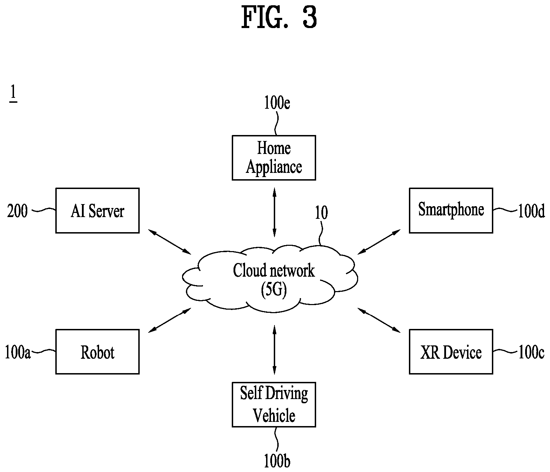

Hereinafter, with reference to FIG. 3, an AI system 1 according to an embodiment of the present disclosure will be described. FIG. 3 illustrates the AI system 1 according to an embodiment of the present disclosure.

Referring to FIG. 3, the AI system 1 may be configured by connecting at least one of the AI server 200, a robot 100a, an autonomous vehicle 100b, an XR device 100c, a smartphone 100d, or a home appliance 100e to a cloud network 10. Here, the robot 100a, the autonomous vehicle 100b, the XR device 100c, the smartphone 100d, or the home appliance 100e, to which AI technology is applied, may be referred to as AI devices 100a to 100e.

The cloud network 10 may refer to a network that constitutes a part of a cloud computing infrastructure or exists within a cloud computing infrastructure. Here, the cloud network 10 may be configured using a 3G network, a 4G or long term evolution (LTE) network, or a 5G network.

That is, the devices 100a to 100e and 200 constituting the AI system 1 may be connected to each other through the cloud network 10. In particular, the devices 100a to 100e and 200 may communicate with each other through a base station, but may also communicate with each other directly without going through a base station.

The AI server 200 may include a server that performs AI processing and a server that performs operations on big data.

The AI server 200 may be connected to at least one of AI devices constituting the AI system 1, such as the robot 100a, the autonomous vehicle 100b, the XR device 100c, the smartphone 100d, or the home appliance 100e, through the cloud network 10 and may assist at least a part of the AI processing of the connected AI devices 100a to 100e.

In this case, the AI server 200 may train an ANN according to a machine learning algorithm on behalf of the AI devices 100a to 100e and may directly store the learning model or transmit the learning model to the AI devices 100a to 100e.

In this case, the AI server 200 may receive input data from the AI devices 100a to 100e, infer a result value for the received input data by using the learning model, and generate a response or control command based on the inferred result value and transmit the response or control command to the AI devices 100a to 100e.

Alternatively, the AI devices 100a to 100e may directly infer a result value for input data by using a learning model and generate a response or control command based on the inferred result value.

Hereinafter, various embodiments of the AI devices 100a to 100e to which the technology described above is applied are described. Here, the AI devices 100a to 100e shown in FIG. 3 may be considered as specific examples of the AI device 100 illustrated in FIG. 1.

The robot 100a may be implemented as a guide robot, a transport robot, a cleaning robot, a wearable robot, an entertainment robot, a pet robot, an unmanned flying robot, or the like by applying AI technology.

The robot 100a may include a robot control module for controlling movement, and the robot control module may mean a software module or a chip implementing the same as hardware.

The robot 100a may obtain status information of the robot 100a, detect (recognize) an ambient environment and objects, generate map data, determine a movement path and driving plan, determine a response to user interaction, or determine an operation by using sensor information obtained from various types of sensors.

Here, the robot 100a may use sensor information obtained from at least one sensor from among lidar, radar, and camera to determine the movement path and the driving plan.

The robot 100a may perform the operations described above by using a learning model including at least one ANN. For example, the robot 100a may recognize the ambient environment and objects by using the learning model and determine operations by using the recognized ambient environment information or object information. Here, the learning model may be learned directly from the robot 100a or from the external device such as the AI server 200.

In this case, the robot 100a may directly generate a result by using the learning model to perform an operation but may perform the operation by transmitting sensor information to the external device such as the AI server 200 and receiving the result generated accordingly.

The robot 100a may determine a movement path and a driving plan by using at least one of map data, object information detected from sensor information, or object information obtained from an external device, and control a driving unit to drive the robot 100a according to the determined movement path and driving plan.

The map data may include object identification information for various objects located in a space in which the robot 100a moves. For example, map data may include object identification information for fixed objects such as walls and doors, as well as movable objects such as flower pots and desks. The object identification information may include a name, a type, a distance, or a location.

The robot 100a may control the driving unit based on control/interaction of a user. In this case, the robot 100a may obtain intention information of interaction according to movement or voice utterance of the user and determine a response based on the obtained intention information to perform an operation.

The autonomous vehicle 100b may be implemented as mobile robots, vehicles, unmanned aerial vehicles, or the like by applying AI technology.

The autonomous vehicle 100b may include an autonomous driving control module for controlling an autonomous driving function, and the autonomous driving control module may mean a software module or a chip that implements the same as hardware. The autonomous driving control module may be included internally as a component of the autonomous vehicle 100b but may also be configured as separate hardware and connected to the outside of the autonomous vehicle 100b.

The autonomous vehicle 100b may obtain status information of the autonomous vehicle 100b, detect (recognize) an ambient environment and objects, generate map data, determine a movement path and driving plan, or determine an operation by using sensor information obtained from various types of sensors.

Here, the autonomous vehicle 100b may use sensor information obtained from at least one sensor from among lidar, radar, and camera, similar to the robot 100a, to determine a movement path and a driving plan.

In particular, the autonomous vehicle 100b may recognize the environment or objects in an area in which a field of vision is hidden or an area greater than a certain distance by receiving sensor information from external devices or may receive information recognized directly from external devices.

The autonomous vehicle 100b may perform the operations described above by using a learning model including at least one ANN. For example, the autonomous vehicle 100b may recognize the ambient environment and objects by using the learning model and determine a driving route by using the recognized ambient environment information or object information. Here, the learning model may be learned directly from the autonomous vehicle 100b or from the external device such as the AI server 200.

In this case, the autonomous vehicle 100b may directly generate a result by using the learning model to perform an operation but may perform the operation by transmitting sensor information to the external device such as the AI server 200 and receiving the result generated accordingly.

The autonomous vehicle 100b may determine a movement path and a driving plan by using at least one of map data, object information detected from sensor information, or object information obtained from an external device, and control a driving to drive the autonomous vehicle 100b according to the determined movement path and driving plan.

The map data may include object identification information for various objects located in a space in which the autonomous vehicle 100b moves. For example, map data may include object identification information for fixed objects such as streetlights, rocks, and buildings, as well as movable objects such as vehicles and pedestrians. The object identification information may include a name, a type, a distance, or a location.

The autonomous vehicle 100b may control the driving based on control/interaction of a user. In this case, the autonomous vehicle 100b may obtain intention information of interaction according to movement or voice utterance of the user and determine a response based on the obtained intention information to perform an operation.

The XR device 100c may be implemented as a head-mount display (HMD), a head-up display (HUD) installed in a vehicle, a television, a mobile phone, a smart phone, a computer, a wearable device, a home appliance, digital signage, a vehicle, a fixed robot, a mobile robot, or the like by applying AI technology.

The XR device 100c may obtain information about a surrounding space or real objects by analyzing 3D point cloud data or image data obtained through various sensors or from an external device to generate location data and attribute data for 3D points and may render and output an XR object to be output. For example, the XR device 100c may output an XR object containing additional information about the recognized object corresponding to the recognized object.

The XR device 100c may perform the operations described above by using a learning model including at least one ANN. For example, the XR device 100c may recognize a real object from 3D point cloud data or image data by using a learning model and provide information corresponding to the recognized real object. Here, the learning model may be learned directly from the XR device 100c or from the external device such as the AI server 200.

In this case, the XR device 100c may directly generate a result by using the learning model to perform an operation but may perform the operation by transmitting sensor information to the external device such as the AI server 200 and receiving the result generated accordingly.

The robot 100a may be implemented as a guide robot, a transport robot, a cleaning robot, a wearable robot, an entertainment robot, a pet robot, an unmanned flying robot, or the like by applying AI technology and autonomous driving technology.

The robot 100a to which AI technology and autonomous driving technology are applied may refer to a robot itself with an autonomous driving function, or the robot 100a that interacts with the autonomous vehicle 100b.

The robot 100a with the autonomous driving function may a general term for devices that autonomously move along a given path without user control or move by autonomously determining the path.

The robot 100a with the autonomous driving function and the autonomous vehicle 100b may use a common sensing method to determine one or more of a movement path or a driving plan. For example, the robot 100a with the autonomous driving function and the autonomous vehicle 100b may determine one or more of a movement path or a driving plan by using information sensed through a lidar, radar, and camera.

The robot 100a interacting with the autonomous vehicle 100b may exist separately from the autonomous vehicle 100b, and may be linked to the autonomous driving function within the autonomous vehicle 100b or perform an operation linked to a user riding in the autonomous vehicle 100b.

In this case, the robot 100a interacting with the autonomous vehicle 100b may control or assist the autonomous driving function of the autonomous vehicle 100b by obtaining sensor information on behalf of the autonomous vehicle 100b and providing the sensor information to the autonomous vehicle 100b or by obtaining the sensor information and generating ambient environment information or object information and providing the generated information to the autonomous vehicle 100b.

Alternatively, the robot 100a interacting with the autonomous vehicle 100b may monitor a user riding in the autonomous vehicle 100b or control a function of the autonomous vehicle 100b through an interaction with the user. For example, when the robot 100a determines that a driver is drowsy, the robot 100a may activate the autonomous driving function of the autonomous vehicle 100b or assist in controlling the driving unit of the autonomous vehicle 100b. Here, the function of the autonomous vehicle 100b controlled by the robot 100a may include not only a simple autonomous driving function, but also a function provided by a navigation system or audio system equipped inside the autonomous vehicle 100b.

Alternatively, the robot 100a interacting with the autonomous vehicle 100b may provide information to the autonomous vehicle 100b or assist functions from outside the autonomous vehicle 100b. For example, the robot 100a may provide traffic information including signal information to the autonomous vehicle 100b, such as a smart traffic light, or may interact with the autonomous vehicle 100b to automatically connect an electric charger to a charging port, such as an automatic electric charger for an electric vehicle.

The robot 100a may be implemented as a guide robot, a transport robot, a cleaning robot, a wearable robot, an entertainment robot, a pet robot, an unmanned flying robot, a drone, or the like by applying AI technology and XR technology.

The robot 100a to which XR technology is applied may refer to a robot that is a target of control/interaction within an XR image. In this case, the robot 100a is separated from the XR device 100c and may be operatively connected thereto.

When the robot 100a that is a target of control/interaction within an XR image obtains sensor information from sensors including a camera, the robot 100a or the XR device 100c may generate an XR image based on the sensor information, and the XR device 100c may output the generated XR image. The robot 100a may operate based on control signals input through the XR device 100c or user interaction.

For example, a user may check an XR image corresponding to a viewpoint of a remotely connected robot 100a through an external device such as the XR device 100c, and through an interaction, adjust an autonomous driving path of the robot 100a, control the operation or driving, or check information on surrounding objects.

The autonomous vehicle 100b may be implemented as mobile robots, vehicles, unmanned aerial vehicles, or the like by applying AI technology and XR technology.

The autonomous vehicle 100b to which XR technology is applied may refer to an autonomous vehicle equipped with a device for providing XR images, an autonomous vehicle that is a target of control/interaction within an XR image, or the like. In particular, the autonomous vehicle 100b that is a target of control/interaction within the XR image is distinct from the XR device 100c and may be linked therewith.

The autonomous vehicle 100b including a device for providing XR images may obtain sensor information from sensors including a camera and output an XR image generated based on the obtained sensor information. For example, the autonomous vehicle 100b may include an HUD to output an XR image, thereby providing passengers with an XR object corresponding to a real object or an object on a screen.

In this case, when an XR object is output to the HUD, at least a portion of the XR object may be output to overlap the real object toward which a gaze of the passenger is directed. On the other hand, when the XR object is output to a display inside an autonomous vehicle 100b, at least a part of the XR object may be output to overlap an object on the screen. For example, the autonomous vehicle 100b may output XR objects corresponding to objects such as a lane, another vehicle, a traffic light, a traffic sign, a two-wheeled vehicle, a pedestrian, or a building.

When the autonomous vehicle 100b that is a target of control/interaction within an XR image obtains sensor information from sensors including a camera, the autonomous vehicle 100b or the XR device 100c may generate an XR image based on the sensor information, and the XR device 100c may output the generated XR image. The autonomous vehicle 100b may operate based on control signals input through an external device such as the XR device 100c or user interaction.

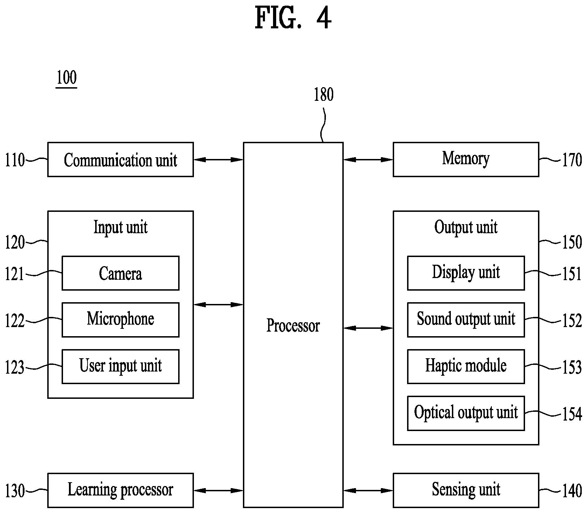

FIG. 4 illustrates the AI device 100 according to an embodiment of the present disclosure.

A repeated description with FIG. 1 is omitted.

Referring to FIG. 4, the input unit 120 may include a camera 121 for inputting an image signal, a microphone 122 for receiving an audio signal, and a user input unit 123 for receiving information from a user.

Voice data or image data collected from the input unit 120 may be analyzed and processed as a control command of the user.

The input unit 120 is to input image information (or signal), audio information (or signal), data, or information input from the user, and to input the image information, the AI device 100 may include one or more cameras 121.

The camera 121 processes image frames, such as still images or moving images, obtained by the image sensor in video call mode or shooting mode. The processed image frame may be displayed in a display unit 151 or stored in the memory 170.

The microphone 122 processes external acoustic signals into electrical voice data. The processed voice data may be utilized in various ways depending on a function being performed (or an application being executed) by the AI device 100. Various noise removal algorithms may be applied to the microphone 122 to remove noise generated in a process of receiving the external acoustic signal.

The user input unit 123 is to receive information from a user. When information is input through the user input unit 123, the processor 180 may control an operation of the AI device 100 to correspond to the input information.

The user input unit 123 may include a mechanical input device (or a mechanical key, for example, a button located on a front/rear surface or lateral surface of a terminal 100, a dome switch, a jog wheel, or a jog switch) and a touch input device. For example, the touch input device may include a virtual key, a soft key, or a visual key displayed on a touch screen through software processing or may include a touch key located on a portion other than the touch screen.

The output unit 150 may include at least one of a display unit 151, a sound output unit 152, a haptic module 153, or an optical output unit 154.

The display unit 151 displays (outputs) information processed in the AI device 100. For example, the display unit 151 may display execution screen information of an application program executed in the AI device 100, or user interface (UI) or graphic user interface (GUI) information according to such execution screen information.

The display unit 151 may implement a touch screen by forming a mutual layer structure with the touch sensor or integrally forming the display unit 151 with the touch screen. The touch screen may function as the user input unit 123 that provides an input interface between the AI device 100 and the user while also providing an output interface between the terminal 100 and the user.

The sound output unit 152 may output audio data received from the communication unit 110 or stored in the memory 170 in a call signal reception mode, a call mode, a recording mode, a voice recognition mode, a broadcast reception mode, or the like.

The sound output unit 152 may include at least one of a receiver, a speaker, or a buzzer.

The haptic module 153 generates various tactile effects that the user feels. A representative example of the tactile effect generated by the haptic module 153 may include vibration.

The optical output unit 154 outputs a signal to notify occurrence of an event by using light from a light source of the AI device 100. Examples of events occurring in the AI device 100 may include receiving a message, receiving a call signal, receiving a missed call, an alarm, a schedule notification, receiving an email, and receiving information through an application.

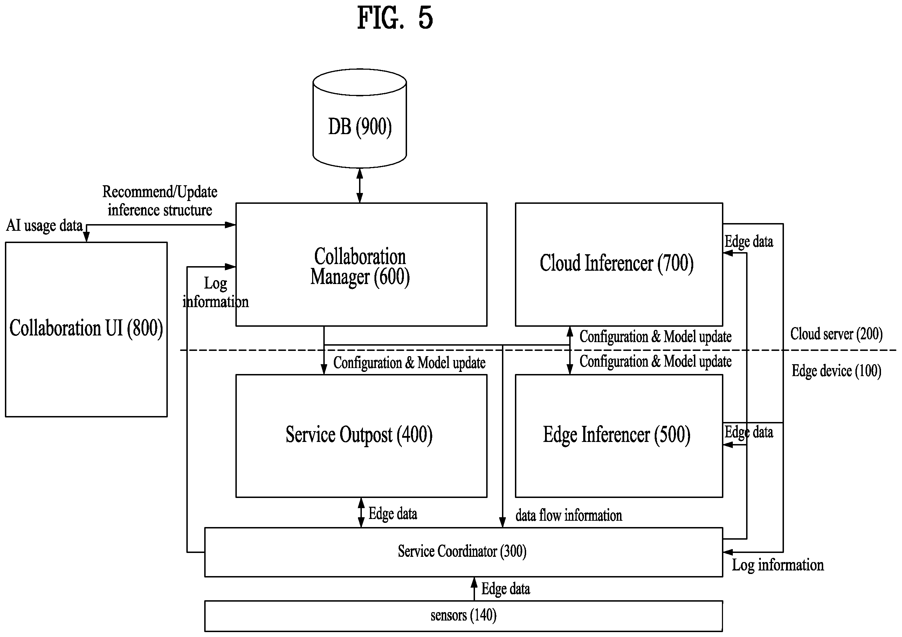

Hereinafter, with reference to FIG. 5, a system for collaboration between an edge device and a cloud server according to an embodiment of the present disclosure will be described in terms of software. FIG. 5 is a block diagram of a collaboration system between an edge device and a cloud server in terms of software according to an embodiment of the present disclosure.

Hereinafter, the description is given assuming that the edge device 100 is a vehicle.

First, at least one sensor provided in the sensing unit 140 of the vehicle 100 may collect various data related to the vehicle 100. Data related to the vehicle 100 collected by at least one of the sensors may be understood as edge data.

The sensing unit 140 may include at least one of a location search unit (not shown), a vehicle status collection unit (not shown), or a vehicle interior/exterior situation collection unit (not shown).

The location search unit may search for the current location of the vehicle 100 and provide the current location to the processor 180 of the vehicle.

Here, the location search unit may search for the current location of the vehicle through at least one of satellite navigation or deduced navigation.

In this case, the satellite navigation measures location information of a vehicle based on global navigation satellite system (GNSS) and may search for the current location by receiving location information from a system such as global positioning system (GPS), global navigation satellite system (GLONASS), Galileo, and Beidou.

The deduced navigation may measure location information of a vehicle based on speed and dead reckoning (DR) information obtained from a vehicle speedometer (not shown), a gyroscope sensor (not shown), and a geomagnetic sensor (not shown) to search for the current location.

The vehicle status collection unit may collect a driving status of the vehicle and provide the driving status to the processor 180 of the vehicle.

For example, a steering status, a braking status, an acceleration status, and a driving status of the vehicle may be collected and provided.

The vehicle interior/exterior situation collection unit may collect data on the exterior and interior situations of the vehicle and provide the data to the processor 180 of the vehicle.

Here, the vehicle interior/exterior situation collection unit may include at least one of a camera (e.g., a vehicle exterior camera (i.e., a front camera, a left-side camera, a right-side camera, or a rear-view camera) and a vehicle interior camera (i.e., a driver camera or a passenger camera)), a a radar, and a lidar and detect all surrounding situations necessary for autonomous driving, such as a lane, a traffic light, a surrounding vehicle, a pedestrian, an obstacle, and a passenger.

Edge data collected by the sensing unit 140 may be transmitted to a service coordinator 300. The transmission may be performed in real time as the edge data is collected. That is, when the data is collected by the sensing unit 140, the data may be transmitted to the service coordinator 300 virtually immediately.

The service coordinator 300 may receive the edge data collected by the sensing unit 140 and determine whether the received edge data is related to at least one of a plurality of services provided by the vehicle 100 according to data flow setting determined through a collaboration manager 600 described below and received from the collaboration manager 600.

The data flow setting refers to information about a path along which data flows for data processing within this system and may be determined in connection with the system configuration described below. That is, the data flow setting may include information on i) a path through which various edge data collected from the sensing unit 140 are transmitted to a service outpost 400 described below and ii) information on a component to which the edge data is transmitted from among an edge inferencer 500 and a cloud inferencer 700 described below to become input data for inference, i.e., an inference location of the edge data, in accordance with the system configuration. In the edge data, at least one of a path along which the edge data is transmitted to the service outpost 400 and the inference location may be changed depending on a type of the edge data. The data flow setting may be changed or generated together with the changed system configuration when the system configuration is changed.

That is, through the data flow setting, at least one of a plurality of services (i.e., a plurality of services provided by the vehicle) within the service outpost 400 described below may be defined to correspond to each type of the edge data (e.g., an image type, a voice or sound type, a temperature type, or an ambient light brightness type), and the inference location of the edge data may be determined to correspond to each of the plurality of services.

As a determination result, when the received data is not related to any of the plurality of services, the service coordinator 300 may disregard the received edge data.

However, as a determination result, when the received data is related to at least one of the plurality of services, the service coordinator 300 may transmit the edge data to the service outpost 400. In particular, the service coordinator 300 may transmit the edge data to a service group within the service outpost 400 responsible for at least one related service. The service groups are a grouping of components that provide similar services, which will be described below.

The service outpost 400 may process the edge data into an appropriate form, if necessary, and detect the edge data or triggering data required for at least one of the plurality of services from the processed edge data.

When the triggering data is detected, the service outpost 400 may receive and process edge data received from the sensing unit 140 through the service coordinator 300 for a certain time (e.g., 30 seconds) from a time at which the triggering data is detected and transmit the processed data to the edge inferencer 500 or the cloud inferencer 700. The processed data becomes input data for inference of the edge inferencer 500 or the cloud inferencer 700. The processed data may be transmitted from the service outpost 400 to the edge inferencer 500 or the cloud inferencer 700 through the service coordinator 300, as shown in FIG. 5. Although not illustrated, the processed data may be transmitted directly from the service outpost 400 to the edge inferencer 500 or the cloud inferencer 700 without going through the service coordinator 300.

In the edge inferencer 500 or the cloud inferencer 700, the processed data may not necessarily have to become the input data for inference. In some cases, edge data (i.e., unprocessed edge data) received from the sensing unit 140 during the certain time from a time at which the triggering data is detected may be transmitted to the edge inferencer 500 or the cloud inferencer 700 through the service coordinator 300 to become input data for inference.

The service coordinator 300, the service outpost 400, and the edge inferencer 500 described above may be modules in terms of software implemented in the vehicle 100, i.e., the edge device and may be implemented through hardware such as the memory 170 and the processor 180 of the vehicle 100.

The collaboration manager 600 to be implemented in the cloud server 200 may determine a reference for detecting triggering data for at least one of the plurality of services from among the edge data and transmit the determined reference to the service outpost 400. The collaboration manager 600 may determine the data flow setting and transmit the data flow setting to the service coordinator 300.

The service outpost 400 may detect the triggering data required for at least one of the plurality of services from the data according to the reference for detecting the triggering data, determined by the collaboration manager 600. As described above, when the triggering data is detected, the processed or unprocessed edge data may be transmitted as input data for inference to the edge inferencer 500 or the cloud inferencer 700 for a certain period of time from a time at which the triggering data is detected.

As described above, according to the determined data flow setting, at least one of the plurality of services within the service outpost 400 may be defined to correspond to each type of the edge data, and the inference location of the edge data may be determined to correspond to each of the plurality of services.

The collaboration manager 600 may receive log information on artificial intelligence inference from at least one of the edge inferencer 500 and the cloud inferencer 700 through the service coordinator 300. The log information is an operation result for artificial intelligence inference and may include, for example, information about system available resources, system resource usage, the number of real-time inferences (or the number of inferences accumulated over a certain period of time), and/or inference accuracy. The log information may be transmitted directly to the collaboration manager 600 without going through the service coordinator 300.

The collaboration manager 600 may determine whether a configuration (hereinafter, "system configuration") of at least one of the service outpost 400, the edge inferencer 500, or the cloud inferencer 700 is suitable, and/or whether an artificial intelligence model currently configured in at least one of the service outpost 400, the edge inferencer 500, or the cloud inferencer 700 is suitable, based on the log information and/or the driving environment of the vehicle. The collaboration manager 600 may further consider an expected communication cost between the vehicle 100 and the cloud server 200 for operating the collaboration system in the determination.

Based on the determination, if necessary, the collaboration manager 600 may change the configuration of at least one of the service outpost 400, the edge inferencer 500, or the cloud inferencer 700 and/or update the configuration with a new artificial intelligence model instead of the existing artificial intelligence models thereof. When the configuration of at least one of the service outpost 400, the edge inferencer 500, or the cloud inferencer 700 is changed, the data flow setting may also be changed according to the changed configuration. For example, when determining that the system resource usage of the edge inferencer 500 is high, the collaboration manager 600 may change the system configuration to lower the system resource usage of the edge inferencer 500 and instead increase the system resource usage of the cloud inferencer 700.

When a new service that is not currently provided in the vehicle 100 is added to the vehicle 100, the collaboration manager 600 may change the system configuration to add the new service and change the data flow settings to match the changed system configuration. The collaboration manager 600 may newly deploy an artificial intelligence model corresponding to the new service to at least one of the service outpost 400, the edge inferencer 500, and thecloud inferencer 700 according to the changed system configuration.

The updating and deploying of the artificial intelligence model may be performed via software over-the-air (OTA) technology.

The edge inferencer 500 and the cloud inferencer 700 may receive the input data for inference and output an inference result based on the artificial intelligence model therein.

The inference result may correspond to a final result of the service provided by the vehicle 100 (e.g., detection and guidance of a dangerous situation) or may be used as an input for another service provided by the vehicle 100 (e.g., a dangerous situation response service).

The collaboration manager 600 and the cloud inferencer 700 described above may be modules in terms of software implemented in the cloud server 200 and may be implemented through hardware such as the memory 230 and the processor 260 of the cloud server 200.

A collaboration user interface 800 may output a system configuration determined by the collaboration manager 600 to obtain user approval before actually applying the configuration, and the user may approve the determined system configuration through the collaboration user interface 800. The collaboration user interface 800 may be output through the display unit 151 of the vehicle 100 or may be output to another device of the user (e.g., the smartphone 100d).

The collaboration manager 600 may apply the system configuration to the present system when the user approves the system configuration through the collaboration user interface 800.

The collaboration user interface 800 may output the system resource usage required for each service currently provided by the vehicle 100, thereby helping the user to determine whether to approve the determined system configuration by referring to the output system resource usage.

A database 900 may store at least one artificial intelligence model and footprint information that are to be applied to the present system. The artificial intelligence model is described previously, and thus a detailed description will be omitted. The footprint information may include system resource usage information expected to be required for each service when the present system is designed.

The database 900 may include log information on artificial intelligence inference of the edge inferencer 500 and the cloud inferencer 700. The log information may be transmitted from the edge inferencer 500 and the cloud inferencer 700 to the collaboration manager 600 through through the service coordinator 300, and the collaboration manager 600 may store the log information in the database 900. Although not shown, the log information may be directly transmitted from the edge inferencer 500 and/or the cloud inferencer 700 to the collaboration manager 600 without going through the service coordinator 300.

The database 900 may store system information of the edge device 100 (i.e., a vehicle) utilized in the collaboration system. When the system information of the edge device used in the collaboration system is changed, the changed system information may be transmitted to the collaboration manager 600 through the service coordinator 300, and the collaboration manager 600 may be updated to the database 900.

The collaboration manager 600 may determine the suitability of the configuration of at least one of the service outpost 400, the edge inferencer 500, or the cloud inferencer 700 by referring to the log information stored in the database 900.

The collaboration manager 600 may determine the suitability of the artificial intelligence model loaded in at least one of the service outpost 400, the edge inferencer 500, or the cloud inferencer 700 by referring to the log information stored in the database 900. When the currently loaded artificial intelligence model is determined to be unsuitable, the collaboration manager 600 may update or replace the currently loaded artificial intelligence model byusing the artificial intelligence model stored in the database 900.

Even when a new service is added to the vehicle 100, the collaboration manager 600 may download an artificial intelligence model for the new service from the database 900 and newly deploy the artificial intelligence model to at least one of the service outpost 400, the edge inferencer 500, or the cloud inferencer 700.

The collaboration manager 600 may determine the treference for detecting the triggering data by referring to the log information stored in the database 900. For example, when determining that there is a large number of inferences of the edge inferencer 500 and/or the cloud inferencer 700 or that the system resource usage is high, the collaboration manager 600 may be induced to increase the reference for detecting the triggering data to lower the number of inferences or to lower the system resource usage. In contrast, when determining that there is a small number of inferences of the edge inferencer 500 and/or the cloud inferencer 700 or that there is a room in the system resource usage, the collaboration manager 600 may be induced to lower the reference for detecting the triggering data to increase the number of inferences or to increase the system resource usage.

The collaboration manager 600 may determine or change the data flow setting by referring to the log information stored in the database 900. For example, when it is determined that the number of inferences of the edge inferencer 500 is high or the system resource usage is high, the data flow setting may be determined or changed such that the edge data as the input data for inference is transmitted to the cloud inferencer 700. In contrast, for example, when it is determined that the number of inferences of the edge inferencer 500 is low or there is a room in the system resource usage, the data flow setting may be determined or changed such that the edge data as the input data for inference is transmitted to the edge inferencer 500.

In FIG. 5, the database 100 is illustrated as being implemented as one but may be divided into two or more databases depending on the characteristic of the stored data.

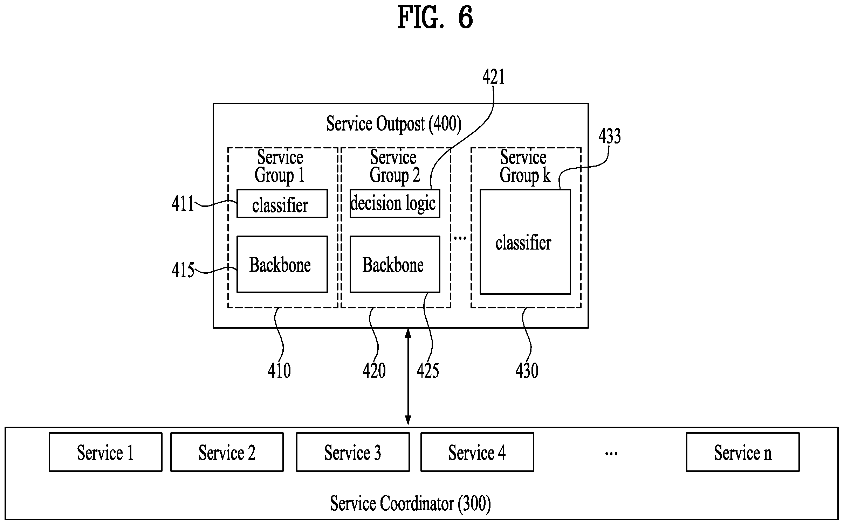

Hereinafter, with reference to FIG. 6, the service coordinator 300 and the service outpost 400 of the collaboration system of FIG. 5 are described in more detail. FIG. 6 is a block diagram illustrating in more detail a relationship between the service coordinator and the service outpost of the collaboration system of FIG. 5.

As described above, at least one sensor provided in the sensing unit 140 of the vehicle 100 may collect various data related to the vehicle 100, and the collected data may be transmitted to the service coordinator 300 in real time.

The service coordinator 300 may store therein information about at least one service to be provided by the vehicle 100 and recognize the information. The information may be recognized, for example, through the data flow setting received through the collaboration manager 600.

The service coordinator 300 may manage which service is to be provided in the present collaboration system based on the data flow settings and a data flow within the present collaboration system.

In FIG. 6, the service coordinator 300 is illustrated as recognizing information about n services to be provided by the vehicle 100.

The service outpost 400 may include at least one service group. FIG. 6 illustrates k service groups as being present within the service outpost 400. k may be a number less than or equal to n.

Each of the n services may correspond to one of the k service groups. That is, each service group may be responsible for one or more services.

Service groups within the service coordinator 300 may be configured with the same internal configuration but may not necessarily have to be configured with the same internal configuration. In FIG. 6, each service group within the service coordinator 300 is illustrated as being configured according to one of three types. Each service group may be configured according to one of more or fewer types than three types.

A first type of service group may include a classifier 411 and a backbone 415 corresponding to the classifier 411, like a first service group 410.

The backbone 415 may be configured as an artificial intelligence model and may process the edge data received from the service coordinator 300 to extract the feature of the received edge data. For example, when the edge data is an image such as a moving image, the image may be processed to extract a feature point of the image.

The classifier 411 may be configured as at least one artificial intelligence model and may detect triggering data from the processed edge data.

A second type of service group may include a decision logic 421 and a backbone 425, like a second service group 420.

The backbone 425 may be configured as an artificial intelligence model and may process the edge data received from the service coordinator 300 to extract the feature of the received edge data. For example, when the edge data is an image such as a moving image frame, the image may be processed to extract movement of key points within the image (e.g., joint movement of a person within the image).

A third type of service group may include a classifier 433, like a third service group 430.

The classifier 433 may be configured as a single light-weight artificial intelligence model and may detect triggering data from edge data (i.e., unprocessed data) received from the service coordinator 300.

A type of each service group may be selected by considering the characteristic of a service that each service group is responsible for. The first to third types of service groups are each an example, and other types of service groups may be configured.

The service coordinator 300 may determine whether a type of edge data collected from the sensing unit 140 is related to at least one of the n services. The related service may be referred to as a "target service".

When it is determined that the collected edge data is related to at least one of the n services, the service coordinator 300 may transmit the edge data to a service group corresponding to the target service from among k service groups within the service outpost 400.

The first service group 410 and the second service group 420 of the service outpost 400 may process the edge data into an appropriate form through their own backbones 415 and 420 and detect triggering data required for the target service from among the processed edge data.

The third service group 430 of the service outpost 400 may detect triggering data required for the target service from among the edge data without processing the edge data.

The service coordinator 300 may transmit the received edge data or the processed edge data to the edge inferencer 500 or the cloud inferencer 700 for a certain period of time from a time when the service group of the service outpost 400 detects the triggering data. That is, whenever the service outpost 400 detects the triggering data, the received data or the processed data may be transmitted to the edge inferencer 500 or the cloud inferencer 700 through the service coordinator 300 for a certain period of time from a time at which the triggering data is detected. The certain time may be determined by the collaboration manager 600 based on the log information and/or the system information.

Accordingly, the edge inferencer 500 or the cloud inferencer 700 may not need to perform an inference operation through an artificial intelligence model for all data sensed by the sensing unit 140, and may perform an inference operation through an artificial intelligence model only for the received data or the processed data for a certain period of time from a time at which the triggering data is detected. Therefore, the amount of computation in the edge inferencer 500 or the cloud inferencer 700 itself may be reduced.

The service group of the service outpost 400 may be understood as a "service filter" in that the service group may not allow all of the received data to be transmitted to the edge inferencer 500 or the cloud inferencer 700, but rather only allow a portion of the data to be filtered and transmitted to the edge inferencer 500 or the cloud inferencer 700.

Alternatively, the service group of the service outpost 400 may be understood as a "service trigger" in that the service group triggers the inference operation of the edge inferencer 500 or the cloud inferencer 700 by transmitting the received data or the processed data to the edge inferencer 500 or the cloud inferencer 700 for a certain period of time from a time at which the triggering data is detected whenever triggering data for the target service is detected.

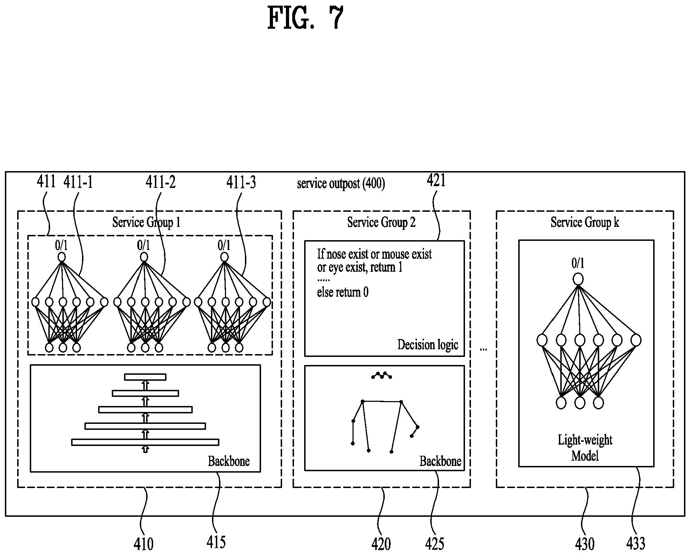

The first to third service groups 410, 420, and 430 corresponding to the first to third types of service groups will be further described with reference to FIG. 7. FIG. 7 is a block diagram illustrating the service outpost of FIG. 6 in more detail.

The first service group 410 may include the classifier 411 and the backbone 415 corresponding to the classifier 411.

The classifier 411 of the first service group 410 is illustrated as including three artificial intelligence models 411-1, 411-2, and 411-3 that are responsible for three services, respectively. The classifier 411 may be responsible for fewer or more than three services and may include fewer or more than three artificial intelligence models.

The backbone 415 may receive edge data related to the three services from the service coordinator 300 and process the edge data to extract the feature of the edge data.

The processed edge data may be transmitted to the classifier 411. The classifier 411 may detect triggering data from the processed edge data. The three artificial intelligence models may detect triggering data for respective services.

When the triggering data is detected, the first service group 410 may transmit a control signal to the service coordinator 300 notifying that the triggering data is detected, and thus the service coordinator 300 may transmit the processed edge data to the edge inferencer 500 or the cloud inferencer 700 for a certain period of time from a time at which the first service group 410 detects the triggering data. That is, the first service group 410 may transmit the processed edge data to the service coordinator 300, and the service coordinator 300 may transmit the processed edge data to the edge inferencer 500 or the cloud inferencer 700.

The second service group 420 may include a decision logic 421 and the backbone 425.

The decision logic 421 may be a coding logic (e.g., a computer vision program) rather than an artificial intelligence model. The decision logic 421 may be responsible for one or more services.

The backbone 425 may receive edge data related to the one or more services from the service coordinator 300 and process the edge data to extract the feature of the edge data.

The processed edge data may be transmitted to the decision logic 421. The decision logic 421 may detect triggering data from the processed edge data.

When the triggering data is detected, the service coordinator 300 may transmit the processed edge data to the edge inferencer 500 or the cloud inferencer 700 for a certain period of time from a time at which the second service group 420 detects the triggering data. That is, the second service group 420 may transmit the processed edge data to the service coordinator 300, and the service coordinator 300 may transmit the processed edge data to the edge inferencer 500 or the cloud inferencer 700.

The third service group 430 may include the classifier 433.

The classifier 433 may be configured as a single light-weight artificial intelligence model and may receive edge data (i.e., unprocessed data) related to at least one service received from the service coordinator 300 to detect the triggering data.

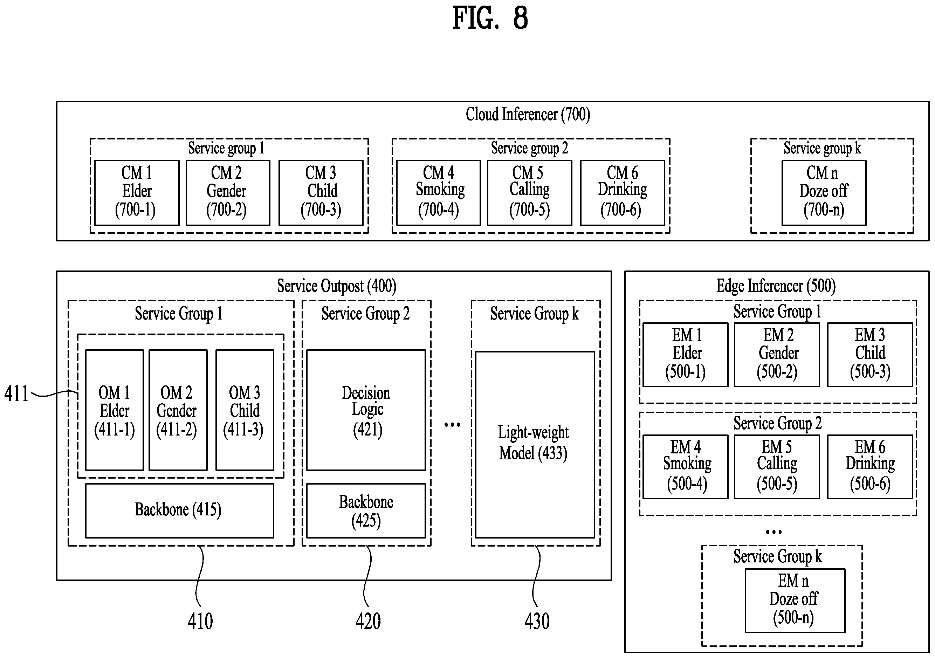

Hereinafter, with reference to FIG. 8, the service outpost 400, the edge inferencer 500, and the cloud inferencer 700 will be described in more detail through specific examples of services to be provided by the present collaboration system. FIG. 8 is a block diagram illustrating in more detail a relationship between the service outpost, edge inferencer, and cloud inferencer of the collaboration system of FIG. 5.

First, the first service group 410 of the service outpost 400 will be described.

The first service group 410 of the above service outpost 400 may be responsible for a first service, a second service, and a third service. In FIG. 8, the first service is an elderly detection service that detects elderly passengers, the second service is a gender detection service that detects the gender of passengers, and the third service is a child detection service that detects children among passengers. This may be merely an example and may be used for other services.

The classifier 411 of the service outpost 400 may include a first artificial intelligence model 411-1, a second artificial intelligence model 411-2, and a third artificial intelligence model 411-3 that are responsible for the first service, the second service, and the third service, respectively. The three artificial intelligence models within the classifier 411 may be referred to as a first outpost model OM1, a second outpost model OM2, and a third outpost model OM3, respectively, in that the three artificial intelligence models are located within the service outpost 400.

From among the three services, the first service (elderly detection service) will be used as a representative example to explain the first service group 410.

Th service coordinator 300 may transmit edge data (e.g., an image from an indoor camera of the vehicle) of the vehicle 100 to the first service group 410 of the service outpost 400 according to the data flow setting.

Then, the backbone 415 of the first service group 410 may process the edge data to extract features of the edge data. For example, the backbone 415 may process the image to extract feature points of the passenger from the image.

The backbone 415 may provide the processed image to all of the first outpost model OM1, the second outpost model OM2, and the third outpost model OM3.

From among the first outpost model OM1, the second outpost model OM2, and the third outpost model OM3, the first outpost model OM1 in charge of the first service may receive and monitor the processed edge data to detect triggering data for the first service. The triggering data may be, for example, an image including a passenger with white or gray hair color.

When the triggering data is detected, the first outpost model OM1 of the first service group 410 transmits a control signal to the service coordinator 300 notifying that the triggering data is detected, and thus the service coordinator 300 may transmit the processed edge data to the edge inferencer 500 or the cloud inferencer 700 for a certain period of time from a time at which the triggering data is detected. That is, the backbone 410 of the first service group 410 may transmit the processed edge data to the service coordinator 300, and the service coordinator 300 may transmit the processed edge data to the edge inferencer 500 or the cloud inferencer 700.

The edge inferencer 500 may include a first artificial intelligence model 500-1, a second artificial intelligence model 500-2, and a third artificial intelligence model 500-3 that are responsible for the first service, the second service, and the third service, respectively. The three artificial intelligence models within the edge inferencer 500 may be referred to as a first edge model EM1, a second edge model EM2, and a third edge model EM3, respectively, in that the three artificial intelligence models are located within the edge inferencer 500. The first edge model EM1, the second edge model EM2, and the third edge model EM3 may correspond to the first service group 410 described above.

The cloud inferencer 700 may also include a first artificial intelligence model 700-1, a second artificial intelligence model 700-2, and a third artificial intelligence model 700-3 that are responsible for the first service, the second service, and the third service, respectively. The three artificial intelligence models within the cloud inferencer 700 may be referred to as a first cloud model CM1, a second cloud model CM2, and a third cloud model CM3, respectively, in that the three artificial intelligence models are located within the cloud inferencer 700. The first cloud model CM1, the second cloud model CM2, and the third cloud model CM3 may also correspond to the first service group 410 described above.

An inference with a corresponding artificial intelligence model to which the service coordinator 300 transmits the processed edge data from among the edge inferencer 500 and the cloud inferencer 700 may be determined according to the data flow setting.

When the data flow setting is determined to transmit the processed edge data to the first edge model EM1 in charge of the first service within the edge inferencer 500, the service coordinator 300 may transmit the processed edge data to the first edge model EM1 within the edge inferencer 500.

When the data flow setting is determined to transmit the processed edge data to the first cloud model CM1 in charge of the first service within the cloud inferencer 700, the service coordinator 300 may transmit the processed edge data to the first cloud model CM1 in the cloud inferencer 700.

The processed edge data may be input data for inference of the first edge model EM1 or the first cloud model CM1.

The first edge model EM1 or the first cloud model CM1 may receive the input data for inference and output an inference result. For example, the first edge model EM1 or the first cloud model CM1 may further analyze a skin condition of a passenger with white or gray hair color to infer whether the passenger is elderly.

The inference result may correspond to a final result of the first service provided by the vehicle 100 (e.g., elderly boarding guide) or may be used as an input for another service provided by the vehicle 100 (e.g., safe driving assistance service).

In the above, the description is given assuming that all of the first edge model EM1, the second edge model EM2, and the third edge model EM3 that are responsible for the first service, the second service, and the third service, respectively, exist within the edge inferencer 500 and that all of the first cloud model CM1, the second cloud model CM2, and the third cloud model CM3 that are responsible for the first service, the second service, and the third service, respectively, exist within the cloud inferencer 700. However, the edge inferencer 500 and the cloud inferencer 700 do not necessarily have to be configured in this way.

For example, the edge inferencer 500 and the cloud inferencer 700 may be configured such that there is no first edge model EM1 responsible for the first service in the edge inferencer 500 and only the cloud inferencer 700 has the first cloud model CM1 responsible for the first service. The configuration may be determined by the collaboration manager 600 based on the log information.

In this case, the data flow setting may also be changed such that the processed data is transmitted only to the first cloud model CM1 of the cloud inferencer 700 while the configuration is maintained.

In contrast, the edge inferencer 500 and the cloud inferencer 700 may be configured such that the edge inferencer 500 has the first edge model EM1 responsible for the first service and there is no first cloud model CM1 responsible for the first service in the cloud inferencer 700.

In this case, the data flow setting may also be changed such that the processed data is transmitted only to the first edge model EM1 of the edge inferencer 500 while the configuration is maintained.

Hereinafter, the second service group 420 of the service outpost 400 will be described.

The second service group 420 of the service outpost 400 may be responsible for a fourth service, a fifth service, and a sixth service. In FIG. 8, the fourth service is illustrated a smoking detection service that detects whether a passenger smokes, the second service is a phone call detection service that detects whether the passenger talks on a phone, and the third service is a drinking detection service that detects whether the passenger drinks. This is merely an example and may be used for other services.

From among the three services, the fifth service (phone call detection service) will be used as a representative example to explain the second service group 420.

Th service coordinator 300 may transmit edge data (e.g., an image from an indoor camera of the vehicle) of the vehicle 100 to the second service group 420 of the service outpost 400 according to the data flow setting.

Then, the backbone 425 of the second service group 420 may process the edge data to extract features of the edge data. For example, when the edge data is an image such as a moving image frame, the image may be processed to extract movement of a key point within the image (e.g., joint movement of a person within the image).

The backbone 425 may provide the processed image to the decision logic 421 that is responsible for all of the fourth service, the fifth service, and the sixth service. The decision logic 421 may be a coding logic (e.g., a computer vision program) rather than an artificial intelligence model.

The decision logic 421 may receive and monitor the processed edge data to detect triggering data for the fifth service. The triggering data may be a moving image frame including movement of a passenger hand within the image approaching a passenger face.

When the triggering data is detected, the decision logic 421 of the second service group 410 transmits a control signal to the service coordinator 300 notifying that the triggering data is detected, and thus the service coordinator 300 may transmit the processed edge data to the edge inferencer 500 or the cloud inferencer 700 for a certain period of time from a time at which the triggering data is detected. That is, the backbone 425 of the second service group 420 may transmit the processed edge data to the service coordinator 300, and the service coordinator 300 may transmit the processed edge data to the edge inferencer 500 or the cloud inferencer 700.

The edge inferencer 500 may include a fourth artificial intelligence model 500-4, a fifth artificial intelligence model 500-5, and a sixth artificial intelligence model 500-6 that are responsible for the fourth service, the fifth service, and the sixth service, respectively. The three artificial intelligence models within the edge inferencer 500 may be referred to as a fourth edge model EM4, a fifth edge model EM5, and a sixth edge model EM6, respectively, in that the three artificial intelligence models are located within the edge inferencer 500. The fourth edge model EM4, the fifth edge model EM5, and the sixth edge model EM6 may correspond to the second service group 420 described above.

The cloud inferencer 700 may also include a fourth artificial intelligence model 700-4, a fifth artificial intelligence model 700-5, and a third artificial intelligence model 700-6 that are responsible for the fourth service, the fifth service, and the sixth service, respectively. The three artificial intelligence models within the cloud inferencer 700 may be referred to as a fourth cloud model CM4, a fifth cloud model CM5, and a sixth cloud model CM6, respectively, in that the three artificial intelligence models are located within the cloud inferencer 700. The fourth cloud model CM4, the fifth cloud model CM5, and the sixth cloud model CM6 may also correspond to the second service group 420 described above.

An inference with a corresponding artificial intelligence model to which the service coordinator 300 transmits the processed edge data from among the edge inferencer 500 and the cloud inferencer 700 may be determined according to the data flow setting.

When the data flow setting is determined to transmit the processed edge data to the fifth edge model EM5 in charge of the fifth service within the edge inferencer 500, the service coordinator 300 may transmit the processed edge data to the fifth edge model EM5 within the edge inferencer 500.

When the data flow setting is determined to transmit the processed edge data to the fifth cloud model CM5 in charge of the fifth service within the cloud inferencer 700, the service coordinator 300 may transmit the processed edge data to the fifth cloud model CM5 in the cloud inferencer 700.

The processed edge data may be input data for inference of the fifth edge model EM5 or the fifth cloud model CM5.

The fifth edge model EM5 or the fifth cloud model CM5 may receive the input data for inference and output an inference result. For example, the fifth edge model EM5 or the fifth cloud model CM5 may further detect whether the passenger has a cell phone in his or her hand and infer whether the passenger is on a phone call.

The inference result may correspond to a final result of the fifth service provided by the vehicle 100 (e.g., warning about dangers of talking on phone while driving) or may be used as an input for another service provided by the vehicle 100 (e.g., safe driving assistance service).

In the above, the description is given assuming that all of the fourth edge model EM4, the fifth edge model EM5, and the sixth edge model EM6 that are responsible for the fourth service, the fifth service, and the sixth service, respectively, exist within the edge inferencer 500 and that all of the fourth cloud model CM4, the fifth cloud model CM5, and the sixth cloud model CM6 that are responsible for the fourth service, the fifth service, and the sixth service, respectively, exist within the cloud inferencer 700. However, the edge inferencer 500 and the cloud inferencer 700 do not necessarily have to be configured in this way.

For example, the edge inferencer 500 and the cloud inferencer 700 may be configured such that there is no fifth edge model EM5 responsible for the fifth service in the edge inferencer 500 and only the cloud inferencer 700 has the fifth cloud model CM5 responsible for the fifth service. The configuration may be determined by the collaboration manager 600 based on the log information.

In this case, the data flow setting may also be changed such that the processed data is transmitted only to the fifth cloud model CM5 of the cloud inferencer 700 while the configuration is maintained.

In contrast, the edge inferencer 500 and the cloud inferencer 700 may be configured such that the edge inferencer 500 has the fifth edge model EM1 responsible for the fifth service and there is no fifth cloud model CM5 responsible for the fifth service in the cloud inferencer 700.

In this case, the data flow setting may also be changed such that the processed data is transmitted only to the fifth edge model EM5 of the edge inferencer 500 while the configuration is maintained.

Hereinafter, a k^{th} service group 430 of the service outpost 400 will be described.

The k^{th} service group 430 of the service outpost 400 may be responsible for an n^{th} service. In FIG. 8, the n^{th} service is illustrated as a drowsy driving detection service that detects drowsy driving of a passenger. This is merely an example and may be used for other services.

The service coordinator 300 may transmit edge data (e.g., an image from an indoor camera of the vehicle) of the vehicle 100 to the k^{th} service group 430 of the service outpost 400 according to the data flow setting.

Then, the classifier 433 of the k^{th} service group 430 may detect triggering data for the n^{th} service from the edge data (i.e., unprocessed data) received from the service coordinator 300. The triggering data may be, for example, an image including a driver with his or her eyes closed.

When the triggering data is detected, the classifier 433 of the k^{th} service group 430 transmits a control signal to the service coordinator 300 notifying that the triggering data is detected, and thus the service coordinator 300 may transmit the edge data (i.e., unprocessed edge data) to the edge inferencer 500 or the cloud inferencer 700 for a certain period of time from a time at which the triggering data is detected.

The edge inferencer 500 may include an n^{th} artificial intelligence model 500-n responsible for the n^{th} service. The n^{th} artificial intelligence model 500-n within the edge inferencer 500 may also be referred to as an n^{th} edge model EMn in that the n^{th} artificial intelligence model 500-n is located within the edge inferencer 500. The n^{th} edge model EMn may correspond to the n^{th} service group 430 described above.

The cloud inferencer 700 may include an n^{th} artificial intelligence model 700-n responsible for the n^{th} service. The n^{th} artificial intelligence model 700-n within the cloud inferencer 700 may also be referred to as an n^{th} cloud model CMn in that the n^{th} artificial intelligence model 700-n is located within the cloud inferencer 700. The n^{th} cloud model CMn may correspond to the n^{th} service group 430 described above.

An inference with a corresponding artificial intelligence model to which the service coordinator 300 transmits the edge data from among the edge inferencer 500 and the cloud inferencer 700 may be determined according to the data flow setting.

When the data flow setting is determined to transmit the edge data to the n^{th} edge model EMn in charge of the n^{th} service within the edge inferencer 500, the service coordinator 300 may transmit the edge data to the n^{th} edge model EMn within the edge inferencer 500.

When the data flow setting is determined to transmit the edge data to the n^{th} cloud model CMn in charge of the n^{th} service within the cloud inferencer 700, the service coordinator 300 may transmit the edge data to the n^{th} cloud model CMn in the cloud inferencer 700.

The edge data may be input data for inference of the n^{th} edge model EMn or the n^{th} cloud model CMn.

The n^{th} edge model EMn or the n^{th} cloud model CMn may receive the input data for inference and output an inference result. For example, the n^{th} edge model EMn or the n^{th} cloud model CMn may further analyze the hand and/or head movements of a driver with his or her eyes closed to infer whether the driver is drowsy.

The inference result may correspond to a final result of the n^{th} service provided by the vehicle 100 (e.g., drowsy driving warning guidance) or may be used as an input for another service provided by the vehicle 100 (e.g., safe driving assistance service).

In the above, the description is given assuming that there is the n^{th} edge model EMn responsible for the n^{th} service in the edge inferencer 500 and there is the n^{th} cloud model CMn responsible for the n^{th} service in the cloud inferencer 700. However, the edge inferencer 500 and the cloud inferencer 700 do not necessarily have to be configured in this way.

For example, the edge inferencer 500 and the cloud inferencer 700 may be configured such that there is no n^{th} edge model EMn responsible for the n^{th} service in the edge inferencer 500 and only the cloud inferencer 700 has the n^{th} cloud model CMn responsible for the n^{th} service. The configuration may be determined by the collaboration manager 600 based on the log information.

In this case, the data flow setting may also be changed such that the data is transmitted only to the n^{th} cloud model CMn of the cloud inferencer 700 while the configuration is maintained.

In contrast, the edge inferencer 500 and the cloud inferencer 700 may be configured such that the edge inferencer 500 has the n^{th} edge model EMn responsible for the n^{th} service and there is no n^{th} cloud model CMn responsible for the n^{th} service in the cloud inferencer 700.

In this case, the data flow setting may also be changed such that the data is transmitted only to the n^{th} edge model EMn of the edge inferencer 500 while the configuration is maintained.

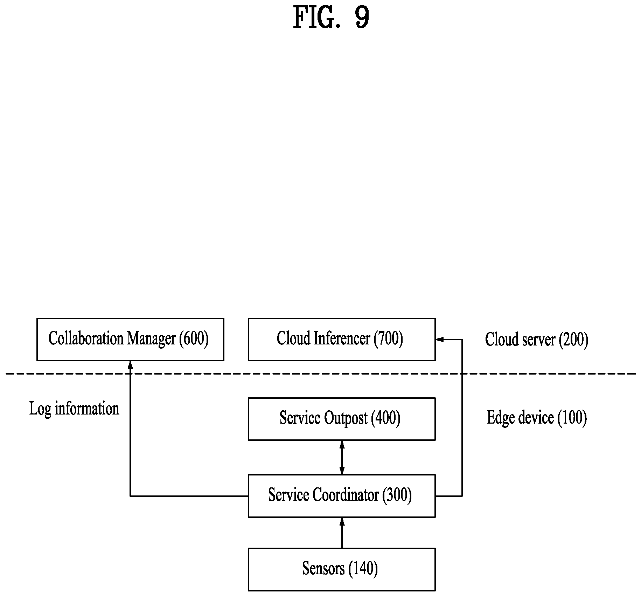

Hereinafter, with reference to FIGS. 9 to 12, an example in which a system configuration may be changed to provide a service in the collaboration system of FIG. 5 will be described. FIGS. 9 to 12 illustrate modified examples of the system configuration in the collaboration system of FIG. 5.

First, as illustrated in FIG. 9, the collaboration manager 600 may determine the system configuration such that inference on edge data for the service is performed in the cloud inferencer 700. Once the system configuration is determined, the data flow setting may also be determined to match the system configuration.

According to the system configuration accordingly, an inference model (i.e., artificial intelligence model) responsible for the service may be provided only in the cloud inferencer 700 and not in the edge inferencer 500.

The service coordinator 300 may transmit the edge data received from the sensing unit 140 to the service outpost 400.

Whenever the triggering data is detected from the edge data by the service outpost 400, the service outpost 400 may transmit the edge data as input data for inference to the cloud inferencer 700 for a certain period of time from a time at which the triggering data is detected. As described above, the transmitted edge data may be processed or unprocessed by the service outpost 400.

The cloud inferencer 700 may receive the input data for inference and output an inference result.

A system configuration shown in FIG. 9 may be useful when the edge device 100 has minimal available resources and a high level of inference is required.

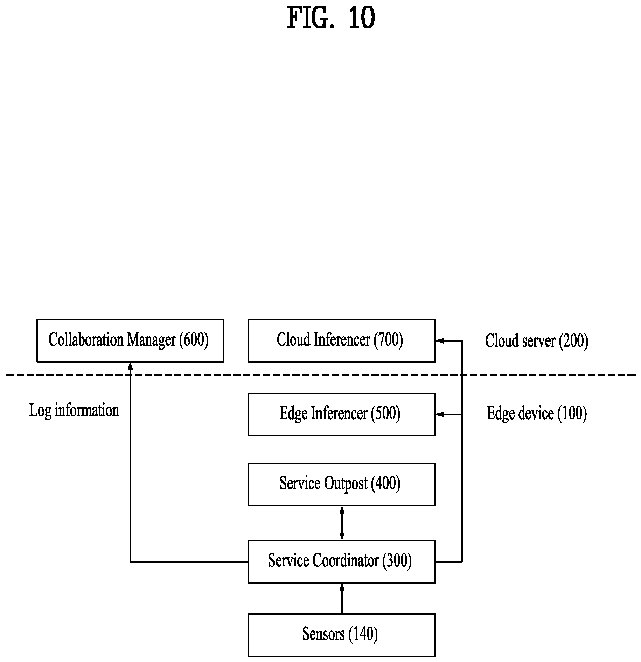

Alternatively, as illustrated in FIG. 10, the collaboration manager 600 may determine the system configuration such that inference on edge data for the service is performed on the edge inferencer 500 or the cloud inferencer 700. Once the system configuration is determined, the data flow setting may also be determined to match the system configuration.

According to the system configuration, an inference model responsible for the service may be provided in both the edge inferencer 500 and the cloud inferencer 700.

The service coordinator 300 may transmit the edge data received from the sensing unit 140 to the service outpost 400.

Whenever the triggering data is detected from the edge data by the service outpost 400, the service outpost 400 may transmit the edge data as input data for inference to the edge inferencer 500 or the cloud inferencer 700 for a certain period of time from a time at which the triggering data is detected. As described above, the transmitted edge data may be processed or unprocessed by the service outpost 400.

Whether the edge data is transmitted to the edge inferencer 500 and the cloud inferencer 700 may be determined, for example, by the real-time system resource usage of each of the edge inferencer 500 and the cloud inferencer 700. That is, the edge data may be transmitted to a location with less real-time system resource usage from among these.

Whether the edge data is transmitted to the edge inferencer 500 and the cloud inferencer 700 may be determined, for example, by the real-time communication environment between the vehicle 100 and the cloud server 200. That is, when real-time communication between the vehicle 100 and the cloud server 200 is smooth or is expected to be smooth, the edge data may be transmitted to the cloud inferencer 700, and when real-time communication between the vehicle 100 and the cloud server 200 is not smooth or is expected to be not smooth, the edge data may be transmitted to the edge inferencer 500.

The edge inferencer 500 or the cloud inferencer 700 may receive the input data for inference and output an inference result.

A system configuration shown in FIG. 10 may also be useful when the edge device 100 has a certain amount of available resources and an inference load is distributed between the edge inferencer 500 and the cloud inferencer 700, thereby reducing the overall communication cost.

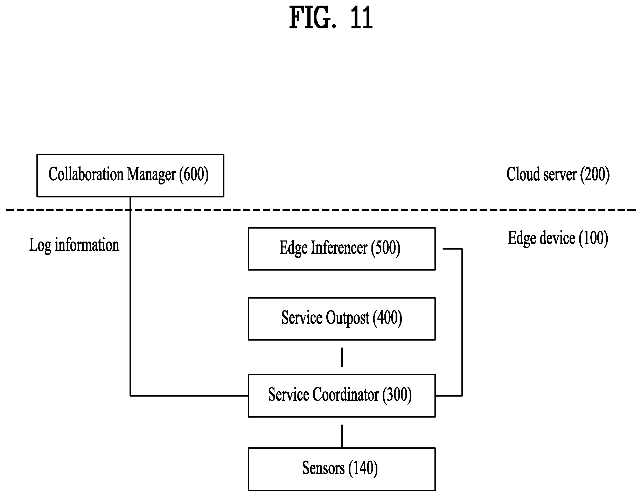

First, as illustrated in FIG. 11, the collaboration manager 600 may determine the system configuration such that inference on edge data for the service is performed in the edge inferencer 500. Once the system configuration is determined, the data flow setting may also be determined to match the system configuration.

According to the system configuration accordingly, an inference model (i.e., artificial intelligence model) responsible for the service may be provided only in the edge inferencer 500 and not in the cloud inferencer 700.

The service coordinator 300 may first transmit the edge data received from the sensing unit 140 to the service outpost 400.

Whenever the triggering data is detected from the edge data by the service outpost 400, the service outpost 400 may transmit the edge data as input data for inference to the edge inferencer 500 for a certain period of time from a time at which the triggering data is detected. As described above, the transmitted edge data may be processed or unprocessed by the service outpost 400.

The edge inferencer 500 may receive the input data for inference and output an inference result.

A system configuration shown in FIG. 11 may be useful when the edge device 100 has sufficient available resources and/or communication costs are high.

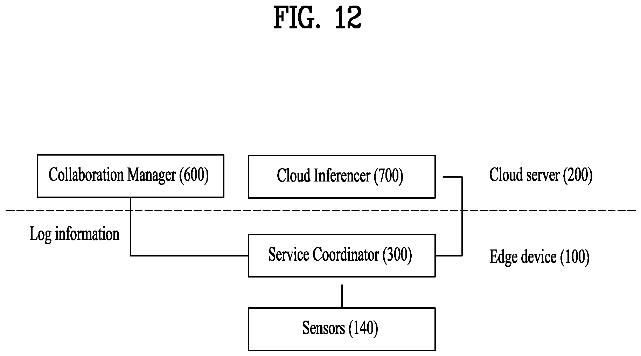

The edge data may not necessarily have to pass through the service outpost 400. All edge data (e.g., streaming data) received by the service coordinator 300 without passing through the service outpost 400 may be transmitted to the edge inferencer 500 or the cloud inferencer 700. This will be further described with reference to FIG. 12. In FIG. 12, for the sake of simplicity, the case in which the edge data is transmitted only to the cloud inferencer 700 will be described.

When the edge data is transmitted only to the cloud inferencer 700, an inference model responsible for the service may be provided only in the cloud inferencer 700 and not in the edge inferencer 500.

The service coordinator 300 may transmit the edge data received from the sensing unit 140 as the input data for inference only to the cloud inferencer 700. That is, the edge data may not pass through the service outpost 400. This may be useful when the edge device 100 has few resources available.

The cloud inferencer 700 may receive the input data for inference and output an inference result.

Although not shown, the edge data may be transmitted only to the edge inferencer 500. In this case, an inference model responsible for the service may be provided only in the edge inferencer 500 and not in the cloud inferencer 700.

Switching between system configurations according to each of FIGS. 9 to 12 may be performed dynamically while monitoring the available resources of the system in real time.

As described above, the collaboration user interface 800 may output a system configuration determined by the collaboration manager 600 to obtain a user approval before actually applying the system configuration, and the user may approve the determined system configuration through the collaboration user interface 800. The collaboration user interface 800 may be output through the display unit 151 of the vehicle 100 or may be output to another device of the user (e.g., the smartphone 100d).

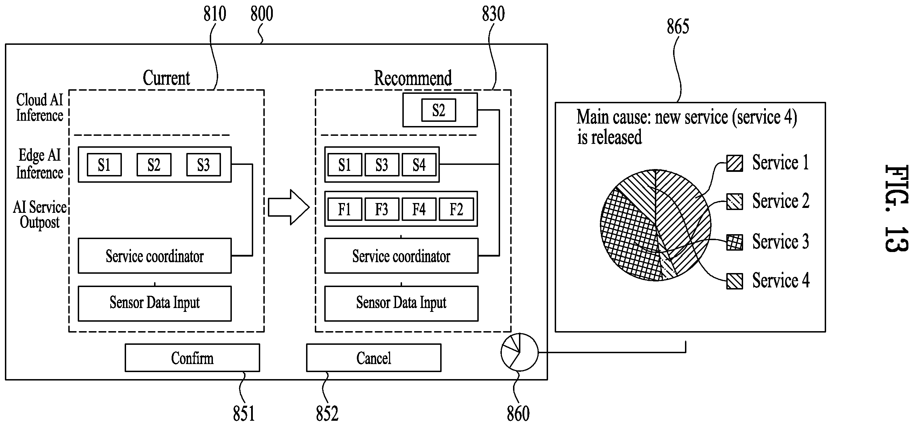

The collaboration user interface 800 will be further described with reference to FIG. 13. FIG. 13 is a diagram illustrating in more detail a collaboration user interface of the collaboration system of FIG. 5.

The collaboration user interface 800 may display a current system configuration 810 and a system configuration 830 proposed by the collaboration manager 600.

In the current system configuration 810 described above, edge data sensed through the sensing unit 140 to provide a first service S1, a second service S2, and a third service S3 is illustrated as being provided to the edge inferencer 500 as input data for inference through the service coordinator 300 without passing through the service outpost 300.

In the above proposed system configuration 830, to further provide a fourth service S4 in addition to the first service S1, the second service S2, and the third service S3, edge data for the first service S1, the third service S3, and the fourth service S4 is illustrated as being provided as input data for inference to the edge inferencer 500 through the service outpost 300 via the service coordinator 300, and edge data for the second service is illustrated as being provided as input data for inference to the cloud inferencer 700 through the service outpost 300 via the service coordinator 300.

The user may approve the proposed system configuration by selecting a confirmation icon 851, for example, by touching, or the user may disapprove the proposed system configuration by selecting a cancel icon 852, for example, by touching.

When the proposed system configuration is approved, the collaboration manager 600 may change a last name of the collaboration system according to the approved system configuration. Alternatively, when the proposed system configuration is not approved, the collaboration manager 600 may maintain the current configuration of the collaboration system without change.

The collaboration user interface 800 may display an icon 860 to further explain the new system configuration. When the icon 860 is selected, for example, by touching, a graphic 860 indicating a reason why the new system configuration is proposed and the system resource usage of each of the first to fourth services may be displayed. Although not shown, an expected change in communication costs when the new system configuration is applied may also be displayed in the graphic 860.

The user may determine whether to approve the proposed system configuration while viewing the graphic 860.

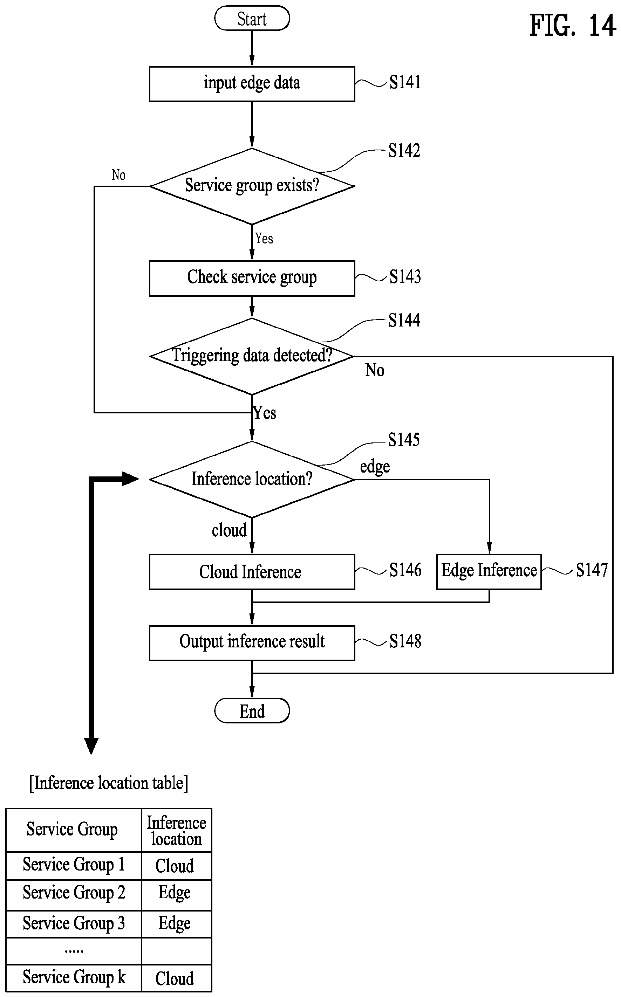

Hereinafter, with reference to FIG. 14, a process in which edge data is processed in one selected from among the edge inferencer 500 and the cloud inferencer 700 for service provision according to an embodiment of the present disclosure will be described in more detail. FIG. 14 illustrates a process in which edge data is processed in one selected from an edge inferencer and a cloud inferencer for service provision according to an embodiment of the present disclosure.

The service coordinator 300 may receive edge data collected by the sensing unit 140 (S141).

Then, the service coordinator 300 may determine whether a service group (or service filter) corresponding to the received edge data exists within the service outpost 400 based on the data flow setting (S142).

When a service group corresponding to the received edge data input exists within the service outpost 400, the service coordinator 300 may identify a service group corresponding to the edge data (S143). Accordingly, the edge data may be transmitted to the identified service group of the service outpost 400.

The service outpost 400 may detect triggering data from the received edge data (S144).

When the triggering data is not detected, the process may be terminated.

However, when the triggering data is detected, the service coordinator 300 may determine the inference location for the edge data (S145).

Even if the service group corresponding to the edge data input in operation S 142 does not exist in the service outpost 400, the process may proceed to operation S145. This corresponds to the case in FIG. 12 described above. Although not shown, when the service group corresponding to the edge data input in operation S 142 does not exist in the service outpost 400 and does not correspond to FIG. 12 described above, the process may be terminated.

To determine the inference location of the edge data, mapping of inference locations for respective services as organized in an inference location table illustrated in FIG. 14 may be utilized. The mapping of inference locations for respective service will be described below.

When the inference location of the edge data is determined by the cloud inferencer 700, the edge data may be transmitted to the cloud inferencer 700 as an edge data for inference (S146).

When the inference location of the edge data is determined by the edge inferencer 500, the edge data may be transmitted to the edge inferencer 500 as an edge data for inference (S147).

The edge inferencer 500 or the cloud inferencer 700 may receive the input data for inference and output an inference result based on the artificial intelligence model therein.

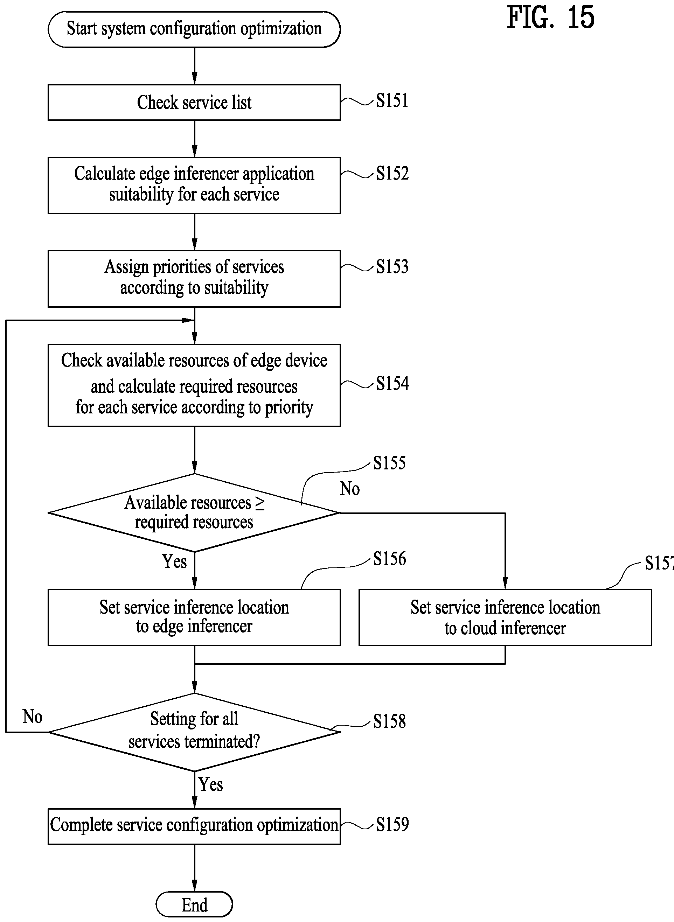

Hereinafter, with reference to FIG. 15, a process for optimizing a system configuration according to an embodiment of the present disclosure will be described. FIG. 15 illustrates a process for optimizing a system configuration according to an embodiment of the present disclosure. During a system configuration optimization process of FIG. 15, mapping of inference locations for respective services of FIG. 14 may be performed during the process, and thus the inference location table may be prepared.

The collaboration manager 600 may initiate a process for optimizing the configuration of the collaboration system. The initiation of the process may be performed regularly at regular time intervals or irregularly when a certain event occurs in the vehicle 100. The certain event may be, for example, a case in which the vehicle 100 is shipped from a factory or is operated by a user for the first time when being delivered to the user after being shipped from the factory or a communication environment of the vehicle 100 is changed or scheduled to be changed (for example, entering or scheduled to enter a shaded area).

The collaboration manager 600 may check a list of a plurality of services that the vehicle 100 needs to provide (S151). The list of the services provided by the vehicle 100 may be a list of services currently provided by the vehicle 100 or a list of services to be provided by the vehicle 100 in the future (i.e., in the list, at least some of the services currently provided by the vehicle 100 may be deleted and/or services to be newly provided by the vehicle 100 may be added).

Then, the collaboration manager 600 may calculate the edge inferencer application suitability for each service (S152). The edge inferencer application suitability may be expressed as a numerical value indicating whether it is appropriate for the inference location for each service to be determined by the edge inferencer. Calculation of the edge inferencer application suitability for each service is described below.

Then, the collaboration manager 600 may determine a priority for each service in the list according to the edge inferencer application suitability (S153). The priority may be a priority for assigning the edge inferencer to each service in the list.

Then, the collaboration manager 600 may check available resources of the edge device 100 and calculate required resources for each service according to the priority (S154).

To more detail, first, the collaboration manager 600 may calculate the required resource of the highest priority service.

When the available resources are equal to or more than the required resources of the highest priority service, the collaboration manager 600 may set an inference location of the highest priority service to the edge inferencer (S155 and S156). When the available resources are less than the required resources of the highest priority service, the collaboration manager 600 may set an inference location of the highest priority service to the cloud inferencer (S155 and S157).

When the inference location for the highest priority service is set, the collaboration manager 600 may set an inference location for a next priority service (S158).

When the inference location of the highest priority service is set to the edge inferencer, the available resource may be deducted by the required resources of the highest priority service. However, when the inference location of the highest priority service is set to the cloud inferencer, the available resource may be maintained without change (S154).

Then, the collaboration manager 600 may calculate the required resources of the next priority service according to the priority (S154).

Then, when the available resources are equal to or more than the required resources of the next priority service, the collaboration manager 600 may set an inference location of the next priority service to the edge inferencer (S155 and S156). When the available resources are less than the required resources of the next priority service, the collaboration manager 600 may set an inference location of the highest priority service to the cloud inferencer (S155 and S157).

The collaboration manager 600 may determine the inference location for all services by repeating operations S154 to S157 above for all services (S158). However, when the available resources are used up or fall below a preset minimum available resource before inference locations for all services are determined, the inference locations for the remaining services for which inference locations are not set yet may all be set to the cloud inferencer. As described above, mapping of inference locations for services in FIG. 14 may be performed.

Then, the collaboration manager 600 may complete optimization of the system configuration based on the determined inference locations for the services.

The collaboration manager 600 may configure the system of the collaboration manager according to the optimized system configuration. For example, when the edge inferencer does not have edge model(s) for the service(s) for which the inference location is set to the edge inferencer, the collaboration manager 600 may deploy, to the edge inferencer, the edge model(s) for the service(s) for which the inference location is set to edge inferencer or delete, from the edge inferencer, edge model(s) for the service(s) for which the inference location is set to the cloud inferencer.

The collaboration manager 600 may also optimize the data flow setting according to the optimized system configuration.

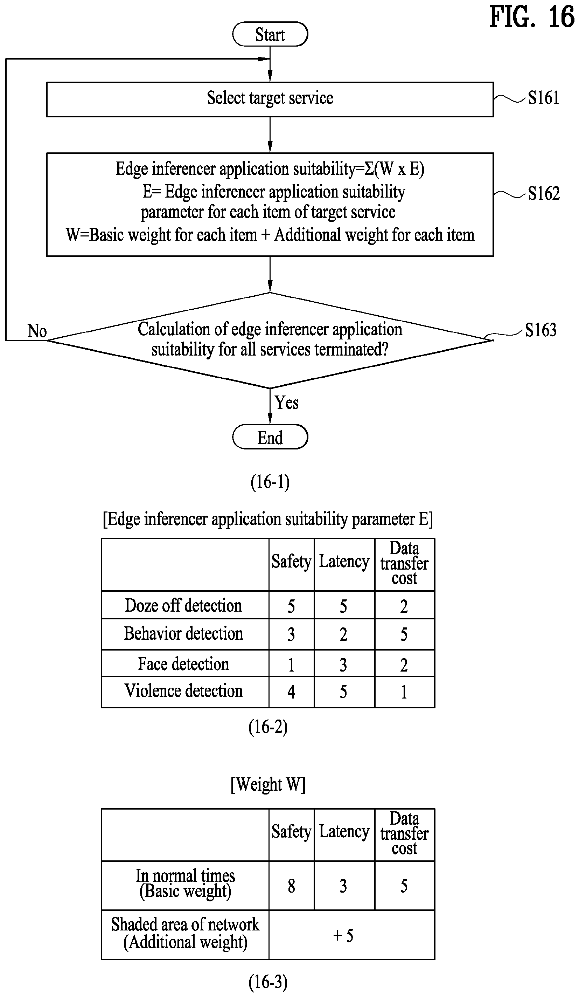

Hereinafter, with reference to FIG. 16, a process of calculating edge inferencer application suitability for each service of FIG. 15 will be described. FIG. 16 illustrates the process of calculating edge inferencer application suitability for each service and parameters and weights therefor.

First, as shown in (16-1) of FIG. 16, the collaboration manager 600 may select a target service for calculating the edge inferencer application suitability from among all services (S161).

Then, the collaboration manager 600 may calculate the edge inferencer application suitability for each service by multiplying an edge inferencer application suitability parameter W for each item of the target service by a weight E for each item and summing the result values for all items (S162).

In (16-2) of FIG. 16, all of the services are illustrated as including four services, i.e., a first service (drowsiness detection), a second service (behavior detection), a third service (face detection), and a fourth service (e.g., violence detection). This is merely an example and more or fewer services may be provided. As illustrated in (16-2) of FIG. 16, edge inferencer suitability parameters may be prepared in advance for three respective items (e.g., safety, latency, and data transfer cost) for each service. The edge inferencer suitability parameter may be updated periodically or aperiodically. For example, the edge inferencer suitability parameter for latency and data transfer cost may vary as a network environment changes. Alternatively, the edge inferencer suitability parameter for safety may vary depending on a passenger or a road condition.

As shown in (16-3) of FIG. 16, a basic weight for each item in normal times and an additional weight for each item in emergency situations (e.g., entering or scheduled to enter a shaded area of a network) may be prepared in advance. The basic weights and the additional weight may also be updated periodically or aperiodically depending on a network environment, a passenger, and a road condition.

More or fewer items may be prepared for each service.

Calculation of the edge inferencer application suitability for each service is described below in more detail.

The collaboration manager 600 may repeat operations S161 and S162 until the edge inferencer application suitability is completed for each of all services (S163).

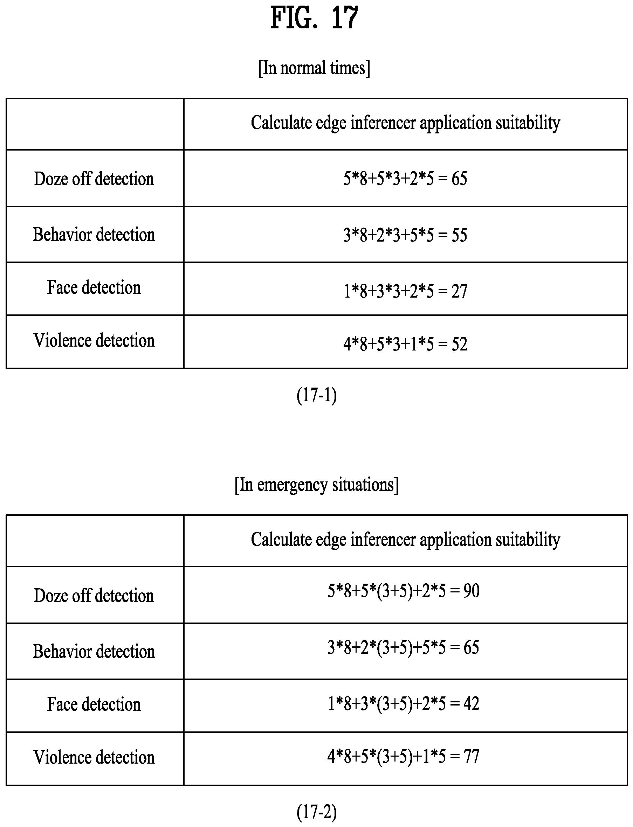

Hereinafter, with reference to FIG. 17, calculation of edge inferencer application suitability for each service of FIG. 16 will be described. FIG. 17 illustrates an example of calculation of the edge inferencer application suitability for each service of FIG. 16.

(17-1) of FIG. 17 illustrates a calculation formula for the edge inferencer application suitability for each service in normal times. The edge inferencer application suitability for each service may be calculated by multiplying the edge inferencer application suitability parameter W for each item for each service by the weight E for a corresponding item in normal times and summing the result values for all items.

In (17-1) of FIG. 17, the edge inferencer application suitability is illustrated as decreasing in the order of the first service, the second service, the fourth service, and the third service in normal times.

(17-2) of FIG. 17 illustrates a calculation formula for the edge inferencer application suitability for each service in emergency situations. The edge inferencer application suitability for each service may be calculated by multiplying the edge inferencer application suitability parameter W for each item for each service by the weight E for a corresponding item in emergency situations and summing the result values for all items.

In (17-2) of FIG. 17, the edge inferencer application suitability is illustrated as decreasing in the order of the first service, the fourth service, the second service, and the third service in emergency situations.

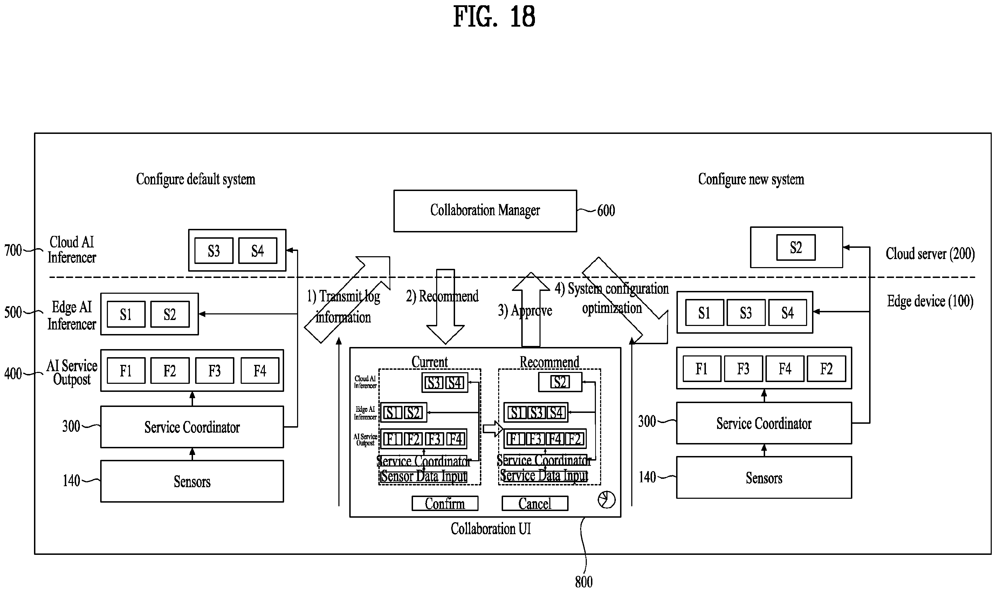

In the above, it is described that the collaboration manager 600 may optimize the configuration of the system with user approval through the collaboration user interface 800 when determining whether the configuration of the current collaboration system, i.e., the system configuration is appropriate based on the log information and/or the driving environment of the vehicle and determining that the system is not appropriate. This will be further described with reference to FIG. 18. FIG. 18 illustrates an example in which system configuration optimization is implemented according to an embodiment of the present disclosure.

For example, it is assumed that a user purchases a new vehicle 100. Then, a default system configuration may be applied to the newly purchased vehicle 100.

According to the default system configuration, the vehicle 100 is illustrated as providing the first service S1, the second service S2, the third service S3, and the fourth service S4, and the service outpost 400 is illustrated as including a first service filter F1, a second service filter F2, a third service filter F3, and a fourth service filter F4 corresponding to the first service S1, the second service S2, the third service S3, and the fourth service S4, respectively. According to the default system configuration, inference of the first service S1 and the second service S2 are illustrated as being performed by the edge inferencer 500 and inference of the third service S3 and the second service S2 are illustrated as being performed in the cloud inferencer 700.

That is, according to the default system configuration, first edge data and second edge data corresponding to the first service S1 and the second service S2 may be filtered through the first service filter F1 and the second service filter F2 of the service outpost 400, respectively, and inferred by the edge inferencer 500, and third edge data and fourth edge data corresponding to the third service S3 and the fourth service S4 may be filtered through the third service filter F3 and the fourth service filter F4 of the service outpost 400, respectively, and inferred by the cloud inferencer 700.

Data on the computation results for inference in the edge inferencer 500 and the cloud inferencer 700 while the vehicle 100 to which the default system configuration is applied is driven for a certain period of time (e.g., one week) may be transmitted as log information to the collaboration manager 600 and stored in the database 900 (FIG. 6).

Then, the collaboration manager 600 may determine whether it is appropriate to continue to apply the default system configuration in the collaboration system based on the accumulated log information, and when it is determined to be not appropriate, the collaboration manager 600 may propose the new system configuration through the collaboration user interface 800.

When the user approves the new system configuration through the collaboration user interface 800, the collaboration manager 600 may apply the new system configuration to the vehicle 100.

According to the new system configuration, the vehicle 100 provides the first service S1, the second service S2, the third service S3, and the fourth service S4, and the service outpost 400 includes the first service filter F1, the second service filter F2, the third service filter F3, and the fourth service filter F4 corresponding to the first service S 1, the second service S2, the third service S3, and the fourth service S4, respectively, which is the same as the default system configuration. However, according to the new system configuration, inference of the first service S1, the third service S3, and the fourth service S4 may be performed in the edge inferencer 500, and inference of the second service S2 may be performed in the cloud inferencer 700, which is different from the default system configuration.

That is, according to the new system configuration, the first edge data, the third edge data, and the fourth edge data corresponding to the first service S 1, the third service S3, and the fourth service S4 are illustrated as being filtered through the first service filter F1, the third service filter F3, and the fourth service filter F4 of the service outpost 400, respectively, and being inferred by the edge inferencer 500, and the second edge data corresponding to the second service S2 is illustrated as being filtered through the second service filter F2 of the service outpost 400 and being inferred by the cloud inferencer 700.

Data on the computation result for inference in the edge inferencer 500 and the cloud inferencer 700 while the vehicle 100 to which the new system configuration is applied is driven for the certain period of time (e.g., one week) may be transmitted as log information to the collaboration manager 600 and stored in the database 900 (FIG. 6), and the collaboration manager 600 may determine whether it is appropriate to continue to apply the new system configuration in the collaboration system based on the accumulated log information and propose another new system configuration through the collaboration user interface 800 when it is determined to be not appropriate.

As such, the system configuration in the collaboration system may be optimized by repeatedly changing the system configuration.

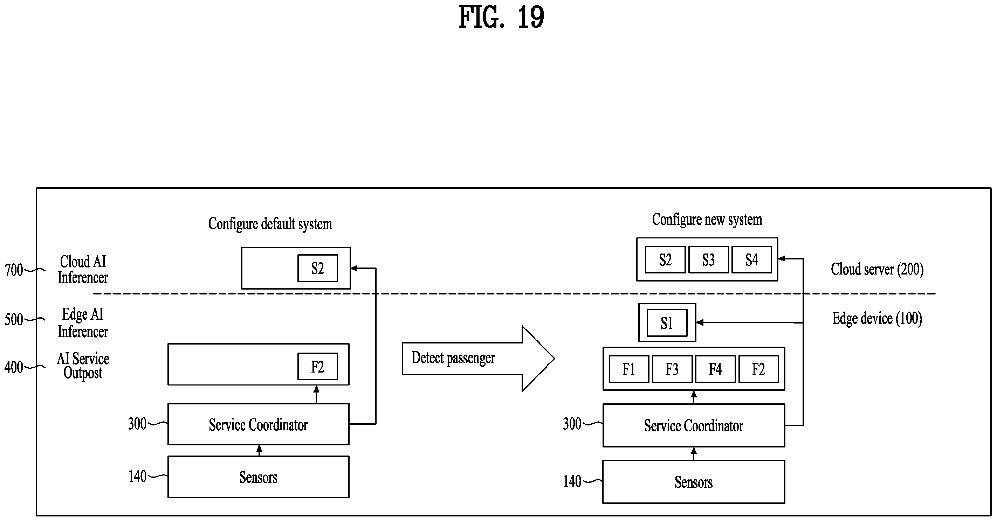

FIG. 18 illustrates a case in which the system configuration for multiple identical services is updated in the collaboration system. However, if necessary, a new service may be added. This will be further described with reference to FIG. 19. FIG. 19 illustrates an example in which system configuration optimization is implemented according to an embodiment of the present disclosure.

For example, it is assumed that the vehicle 100 is a shared vehicle such as a rental car. The vehicle 100 may be delivered to the user with the default system configuration applied.

According to the default system configuration, it is illustrated that the second service S2 is provided to the vehicle 100 and the service outpost 400 includes the second service filter F2 corresponding to the second service S2. The second service S2 is assumed to be a passenger detection service. According to the default system configuration, inference of the second service S2 is illustrated as being performed in the cloud inferencer 700. Inference of the second service S2 may also be performed in the edge inferencer 500. In the collaboration system, a passenger may be inferred through a second service. For example, it may be inferred whether the passenger travels with a pet, travels with children, or travels on business.

The collaboration system may update the system configuration based on the inference result for the passenger. That is, the system configuration may be updated such that a new customized service for the passenger is added to the collaboration system based on the inference result for the passenger.

FIG. 19 illustrates that, according to the updated system configuration, the first service S 1, the third service S3, and the fourth service S4 may be added and provided for the passenger, and the first service filter F1, the third service filter F3, and the fourth service filter F4 corresponding to the first service S 1, the third service S3, and the fourth service S4 may be added and configured to the service outpost 400. It is illustrated that inference of the first service S1 may be performed in the edge inferencer 500 and that inference of the third service S3 and the fourth service S4 may be performed in the cloud inferencer 700.

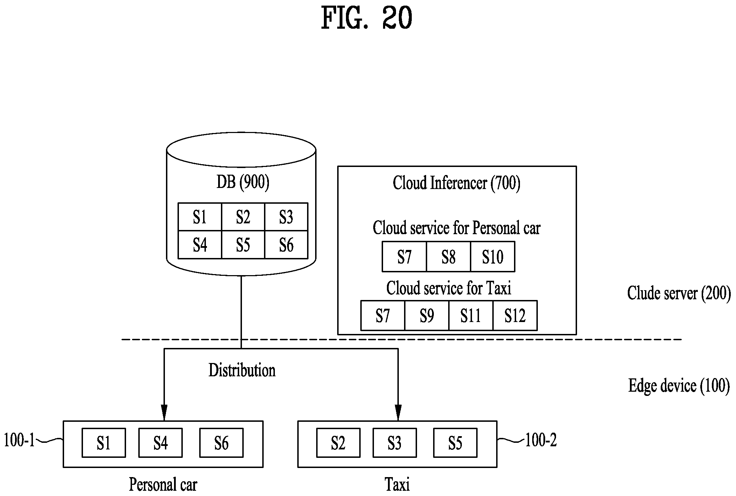

In the above, the change or optimization of the system configuration of the collaboration system for the one vehicle 100 is described. However, the system configuration may vary depending on the intended use for two or more vehicles 100 of the same or similar type. This will be further described with reference to FIG. 20. FIG. 20 illustrates an example in which system configuration optimization is implemented according to an embodiment of the present disclosure.

For example, it is assumed that a first vehicle 100-1 is sold to a private user for personal use, and a second vehicle 100-2 of the same or similar model as the first vehicle 100-1 is sold to a business user for business use (e.g., taxi or rental car.). Here, similar vehicles may refer to vehicles to which the collaboration system may be commonly applied.

When the first vehicle 100-1 and the second vehicle 100-2 are operated for the first time at a time of factory shipment or a time of being delivered to a user after factory shipment, the collaboration system may apply different system configurations to the first vehicle 100-1 and the second vehicle 100-2 according to the intended uses thereof.

As illustrated in FIG. 20, the database 900 may store a first edge model to a sixth edge model corresponding to the first service S1 to the sixth service S6, respectively, and first to sixth service filters corresponding to the first service S1 to the sixth service S6, respectively.

FIG. 20 illustrates, when the first vehicle 100-1 is operated for the first time at a time of factory shipment or a time of being delivered to a private user after factory shipment, the collaboration manager 600 may newly deploy the first edge model, the fourth edge model, and the sixth edge model corresponding to the first service S1, the fourth service S4, and the sixth service S6 for the private user, respectively, to the edge inferencer of the first vehicle 100-1. In this case, the collaboration manager 600 may, if necessary, newly deploy at least one of the first service filter, the fourth service filter, and the sixth service filter corresponding to the first service S1, the fourth service S4, and the sixth service S6 to the service outpost of the first vehicle 100-1. Examples of services for private users may include a convenience function provision service and a drowsiness detection service through facial recognition of a vehicle owner. The collaboration manager 600 may receive information on the purpose of the first vehicle 100-1 from the first vehicle 100-1 when the first vehicle 100-1 is delivered to the user and operated for the first time.

FIG. 20 illustrates, when the second vehicle 100-2 is operated for the first time at a time of factory shipment or a time of being delivered to a business user after factory shipment, the collaboration manager 600 may newly deploy the second edge model, the third edge model, and the fifth edge model corresponding to the second service S2, the third service S3, and the fifth service S5 for the business user, respectively, to the edge inferencer of the second vehicle 100-2. In this case, the collaboration manager 600 may, if necessary, newly deploy at least one of the second service filter, the third service filter, or the fifth service filter corresponding to the second service S2, the third service S3, and the fifth service S5 to the service outpost of the second vehicle 100-2. Examples of services for business users may include a passenger analysis service, a threat detection service, a drowsiness detection service, and a steering wheel hands-off detection service. The collaboration manager 600 may receive information on the purpose of the second vehicle 100-2 from the second vehicle 100-2 when the second vehicle 100-2 is delivered to the user and operated for the first time.

In FIG. 20, it is illustrated that inference for a seventh service, an eighth service, and a tenth service for the first vehicle 100-1 and inference for a seventh service, a ninth service, an eleventh service, and a twelfth service for the second vehicle 100-2 are performed by the cloud inferencer 700.

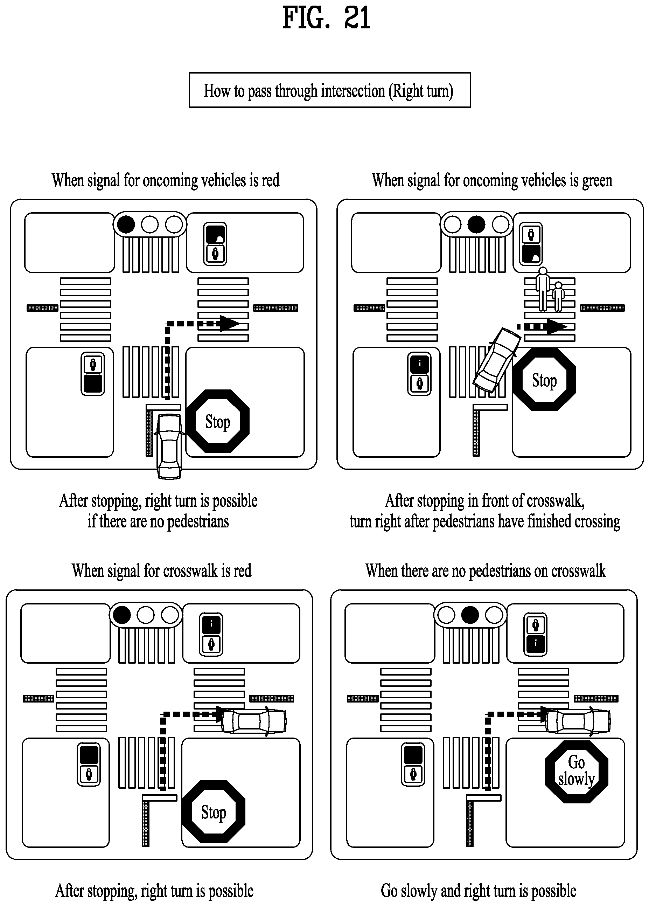

In the above, it is described that the inference location for each service may be determined as the edge inferencer 500 or the cloud inferencer 700. However, in some cases, when the same service is first launched, the inference location may be set to the cloud inferencer 700, but after a certain period of time passes since the launch, the inference location may be changed to the edge inferencer 500. This will be further described with reference to FIG. 21. FIG. 21 illustrates an example in which system configuration optimization is implemented according to an embodiment of the present disclosure.

For example, the revised road traffic law may be implemented. FIG. 21 illustrates the revised and implemented road traffic laws for right turn in intersection driving.

In this case, a new service that guides compliance with the revised road traffic laws for the collaboration system may be prepared and launched. The new service may include a model that guides drivers to comply with the revised road traffic laws during right turn at an intersection. At a time of launch, the new service may be designed such that an inference location thereof is the cloud inferencer 700.

When the new service is launched, the collaboration manager 600 may propose to the user through the collaboration user interface 800 to change the system configuration to deploy and install the new service.

When the proposal is approved by the user, the collaboration manager 600 may deploy and install the new service to the vehicle 100. As described above, the new service may be configured with the collaboration system for the vehicle such that an inference location thereof is the cloud inferencer 700.

The new service may also be deployed to other vehicles in addition to the vehicle 100. In the collaboration system for a plurality of vehicles, when the new service is provided for a certain period of time after the launch of the new service, inference for the new service is made and data with a certain level or more is collected, the artificial intelligence model for the new service may be lightweighted.

As an event occurs in which the artificial intelligence model for the new service is lightweighted, the collaboration manager 600 may change the configuration of the collaboration system for the vehicle 100 under user approval through the collaboration user interface 800 such that the inference location of the new service moves from the cloud inferencer 700 to the edge inferencer 500.

The new service may be lightweighted, and thus may occupy the available resources of the vehicle 100 to a minimum even if the new service is inferred by the edge inferencer 500. The inference location of the new service is the edge inferencer 500, and thus the amount of communication between the vehicle 100 and the cloud server 200 may be reduced compared to when the inference location of the new service is the cloud inferencer 700.

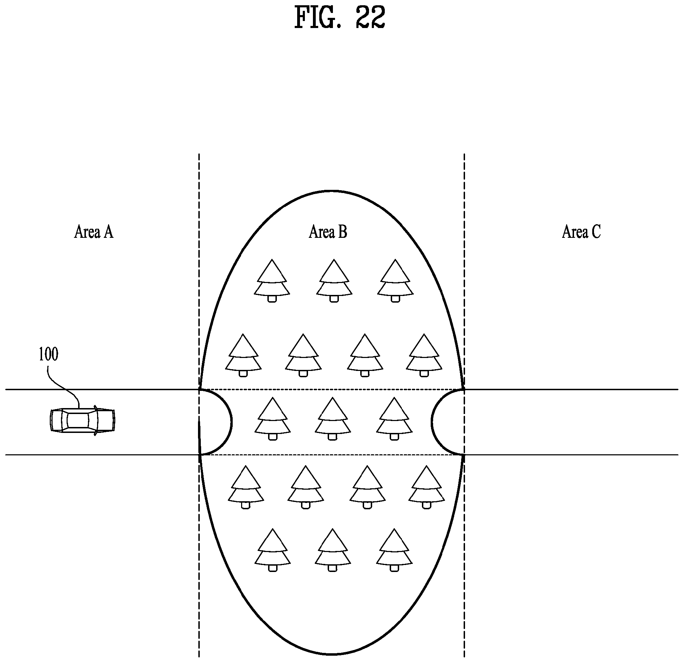

In the above, as described with respect to, for example, FIG. 10, the inference location for a service for the vehicle 100 (e.g., a threat detection service that detects whether a passenger in a vehicle threatens a driver with violence) may vary depending on a communication environment of the vehicle 100. This will be further described with reference to FIG. 22. FIG. 22 illustrates an example in which system configuration optimization is implemented according to an embodiment of the present disclosure.

As shown in FIG. 22, it is assumed that the vehicle 100 drives in an area A in which communication with the cloud server 200 is smooth or good.

In this case, communication between the vehicle 100 and the cloud server 200 is smooth, and thus the edge data of the vehicle 100 may be transmitted to the cloud inferencer 700 such that inference for the threat detection service may be performed in the cloud inferencer 700.

However, as the vehicle 100 continues to drive, the vehicle 100 may approach an area B, such as a tunnel, in which communication between the vehicle 100 and the cloud server 200 is not smooth. The vehicle 100 may detect that the vehicle 100 approaches the area B, for example, through the location search unit.

When the vehicle 100 is expected to reach the area B within a certain period of time in which communication between the vehicle 100 and the cloud server 200 is not smooth (i.e., defective), and the edge model for the threat detection service is not deployed to the vehicle 100, the collaboration manager 600 may change the configuration of the collaboration system such that the edge model for the threat detection service is deployed to the edge inferencer 500 of the vehicle 100. As described above, to this end, user approval through the collaboration user interface 800 may be required. In this case, when the available resources of the vehicle 100 are insufficient to deploy the edge model, available resources may be ensured by terminating other services with a lower priority than the threat detection service and removing the artificial intelligence model for the other services. However, when the edge model for the threat detection service is deployed in the vehicle 100, the configuration of the collaboration system may not be changed.

Then, when the vehicle 100 enters or is scheduled to enter the area B soon, the collaboration manager 600 may change the data flow setting such that the edge data of the vehicle 100 is transmitted to the edge inferencer 500 and inference for the threat detection service is performed in the edge inferencer 500.

When the system configuration is changed, the data flow setting may be changed after the system configuration change, and the data flow settings may be changed simultaneously or nearly simultaneously with the change in the system configuration.

In the area B, whether a driver threatening behavior occurs may be detected through the edge inferencer 500. However, communication is not smooth within the area B, and thus even if the driver threatening behavior occurs, the vehicle 100 may not immediately report this fact to an external server (e.g., an external server for calling security guards or police).

When the vehicle 100 leaves the area B and enters or is scheduled to enter an area C soon, in which communication between the vehicle 100 and the cloud server 200 is smooth, the collaboration manager 600 may change the data flow setting again such that the edge data of the vehicle 100 is transmitted to the cloud inferencer 700 and inference about the threat detection service is performed in the cloud inferencer 700. The collaboration manager 600 may change the configuration of the collaboration system such that the edge model for the threat detection service is removed from the edge inferencer 500 of the vehicle 100. When the vehicle 100 enters the area C, if the driver threatening behavior occurs within the area B, this fact may be automatically reported to the external server.

In FIG. 22, it is described that the inferred location may be changed along with the system configuration in some cases based on the availability of communication in the area. However, the reference for detecting the triggering data and/or the system configuration may vary depending on the characteristics of residents in each area. This will be described again with reference to FIG. 22.

As shown in FIG. 22, it is assumed that there is the vehicle 100 that is mainly driven in an area A. It is assumed that the speech, intonation, and behavior of residents of the area A are generally soft. It is assumed that the vehicle 100 provides the threat detection service.

First, the vehicle 100 is mainly driven in the area A, the configuration and reference for detecting the triggering data of the collaboration system may be optimized such that the threat detection service may be provided to suit the characteristics of the area A. That is, an outpost model in charge of the threat detection service of the service outpost 400 designed to filter the edge data to an appropriate level by considering the general speech, intonation, and behavior of residents of the area A and provide the edge data to the edge inferencer 500 or the cloud inferencer 700 may be applied to the collaboration system, and the reference for detecting the triggering data for the outpost model may be determined. The edge model in charge of the threat detection service of the edge inferencer 500 designed to infer whether a threat is detected from the filtered edge data by considering the general speech, intonation, and behavior of residents of the area A and/or the cloud model in charge of the threat detection service of the cloud inferencer 700 may be applied to the collaboration system.

However, it is assumed that the vehicle 100 passes through an area B and moves to an area C. It is assumed that the speech, intonation, and behavior of residents of the area C are generally rough. It is assumed that the vehicle 100 continues to provide the threat detection service.

In that case, when the collaboration system designed for the area A to provide the above threat detection service is also implemented in the area C, there may be many cases in which a situation is inferred to be a threat even though it is not actually a threat. This may not only lower the reliability of the threat detection service by inferring threat detection incorrectly, but also cause unnecessary inference, which may waste computational system resources.

Accordingly, when the vehicle 100 enters the area C or is scheduled to enter the area C soon within a certain period of time, the collaboration manager 600 may change the reference for detecting the triggering data to be suitable for the area C. For example, in the area C, the reference for detecting the triggering data may be changed such that edge data based on more aggressive speech, intonation, and behavior than in the area A may be filtered and provided to the edge inferencer 500 or the cloud inferencer 700. The changed reference for detecting the triggering data may be set in advance by the collaboration manager 600 based on other vehicles that are mainly driven in the area C.

The collaboration manager 600 may newly deploy an outpost model in charge of the threat detection service, designed to filter the edge data to an appropriate level by considering the general speech, intonation, and behavior of residents of the area C and provide the edge data to the edge inferencer 500 or the cloud inferencer 700, to the service outpost 400. That is, the outpost model responsible for the threat detection service of the service outpost 400 may be updated to suit the area C.

The collaboration manager 600 may newly deploy an edge model and/or a cloud model in charge of the threat detection service designed to infer whether a threat is detected from the filtered edge data by considering the general speech, intonation, and behavior of residents of the area C to the edge inferencer 500 and/or the cloud inferencer 700. That is, the edge model in charge of the threat detection service of the edge inferencer 500 and/or the cloud model in charge of the threat detection service of the cloud inferencer 700 may be updated to suit the area C.

At least one of the updated outpost model, edge model, or cloud model may be predesigned based on other vehicles that are mainly driven in the area C.

There may be cases in which the vehicle 100 already enters the area C, but the edge model for the area C is not completely installed in the edge inferencer 500. In this case, while the edge model is installed in the edge inferencer 500, the edge data may be transmitted to the cloud inferencer 700 such that the inference location for the threat detection service becomes the cloud inferencer 700, and when the edge model is completed being installed in the edge inferencer 500, the edge data may be transmitted to the edge inferencer 500 such that the inference location for the threat detection service becomes the cloud inferencer 500.

When the vehicle 100 returns to the area A after driving in the area C, the configuration and the reference for detecting the triggering data of the collaboration system may be restored to the original states thereof such that the threat detection service may be provided in accordance with the characteristics of the area A.

Various embodiments may be implemented using a machine-readable medium having instructions stored thereon for execution by a processor to perform various methods presented herein. Examples of possible machine-readable mediums include HDD (Hard Disk Drive), SSD (Solid State Disk), SDD (Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the AI device.

## Claims

1. A cloud server communicable with an edge device, the cloud server comprising:
a cloud inferencer including at least one cloud artificial intelligence model configured to receive edge data as input data for inference from the edge device and output an inference result for each of at least one service from among the plurality of services to be provided by the edge device; and
a collaboration manager configured to change a configuration of the cloud inferencer based on at least one of log information of the cloud inferencer, received from the cloud inferencer, or log information of the edge inferencer, received from the edge inferencer provided in the edge device.

2. The cloud server of claim 1, wherein the collaboration manager may be configured to change a configuration of the edge inferencer based on at least one of the log information of the cloud inferencer or the log information of the edge inferencer and transmit information about the changed configuration of the edge inference to the edge device.

3. The cloud server of claim 2, wherein the collaboration manager is configured to change a configuration of a service outpost of the edge device for detecting triggering data from the edge data based on at least one of the log information of the edge inferencer received from the edge inferencer provided in the edge device and transmit information about the changed configuration of the service outpost to the edge device.

4. The cloud server of claim 1, wherein the collaboration manager is configured to generate data flow setting regarding a flow of the edge data in the cloud server and the edge device and transmit the generated data flow setting to the edge device.

5. The cloud server of claim 2, wherein the collaboration manager is configured to determine priorities of the plurality of services based on edge inferencer application suitability for each service of the plurality of services, determine an inference location by comparing a required resource for each of the plurality of services and an available resource of the edge device according to the priorities, and change a configuration of at least one of the cloud inferencer or the edge inference based on an inference location for each service of the plurality of services.

6. The cloud server of claim 5, wherein the collaboration manager is configured to calculate an edge inferencer application suitability for each service by multiplying a prepared edge inferencer suitability parameter for each item for each service by a prepared weight for each item and summing result values for all items.

7. The cloud server of claim 6, wherein the weight for each item has different values in normal times and in emergency situations, and edge inferencer application suitability for each service in normal times is different from edge inferencer application suitability for each service in emergency situations.

8. The cloud server of claim 5, wherein the collaboration manager is configured to change the configuration at regular time intervals or based on a certain event occurring.

9. The cloud server of claim 5, further comprising a collaboration user interface configured to output the changed configuration and obtain approval from a user for the changed configuration,
wherein the collaboration manager is configured to apply the changed configuration to at least one of the cloud server or the edge device after obtaining approval from the user for the changed configuration through the collaboration user interface.

10. The cloud server of claim 2, wherein the collaboration manager is configured to further change the configuration of the edge inferencer as usage of the edge device changes.

11. The cloud server of claim 2, wherein the collaboration manager is configured to determine an initial inference location for providing a new service to the cloud inferencer and change the inference location to the edge inferencer after a certain period of time elapses after providing the new service.

12. The cloud server of claim 2, wherein the collaboration manager is configured to determine an inference location for a specific service based on a communication environment with the edge device.

13. An edge device communicable with a cloud server, the edge device comprising:
a service coordinator configured to manage a flow of edge data collected by at least one sensor for each of a plurality of services provided by the edge device; and
an edge inferencer including at least one edge artificial intelligence model configured to receive the edge data as input data for inference and output an inference result for each of at least one service from among the plurality of services,
wherein a configuration of the edge inferencer is changed according to configuration information received from the cloud server.

14. The edge device of claim 13, further comprising a service outpost configured to detect triggering data from the edge data.

15. The edge device of claim 14, wherein a configuration of the service outpost is changed according to the configuration information received from the cloud server.

16. The edge device of claim 14, wherein the service coordinator is configured to transmit the edge data as the input data for inference to the edge inferencer or the cloud inferencer of the cloud server for a certain period of time from a time at which the triggering data is detected.

17. The edge device of claim 14, wherein the service outpost is configured to process the edge data to extract a feature of the edge data, and
the service coordinator is configured to transmit the processed edge data as the input data for inference to the edge inferencer or the cloud inferencer of the cloud server for a certain period of time from a time at which the triggering data is detected.

18. The edge device of claim 15, wherein the service coordinator is configured to receive edge data from the at least one sensor, check a target service related with the received edge data from among a plurality of services, check an inference location related with the target service based on the triggering data being detected through the service outpost, and transmit the edge data to an inferencer matching the inference location from among the edge inferencer and the cloud inferencer of the cloud server.

19. The edge device of claim 18, wherein the service coordinator is configured to check an inference location related with the target service based on information about data flow setting received from the cloud server.

20. The edge device of claim 14, wherein a reference for detecting the triggering data is changed according to a location of the edge device.
